(19) Europäisches Patentamt
European Patent Office
Office européen des brevets

(11) **EP 4 632 530 A1**

(12) **EUROPEAN PATENT APPLICATION**
published in accordance with Art. 153(4) EPC

(43) Date of publication:
**15.10.2025 Bulletin 2025/42**

(51) International Patent Classification (IPC):
***G06F 1/20*** (2006.01)

(21) Application number: **24830164.0**

(22) Date of filing: **07.05.2024**

(86) International application number:
**PCT/CN2024/091447**

(87) International publication number:
**WO 2025/001516 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.06.2023 CN 202310757613**

(71) Applicant: **Tencent Technology (Shenzhen) Company Limited**
**Shenzhen, Guangdong 518057 (CN)**

(72) Inventors:
• **SU, Haihan**
**Shenzhen, Guangdong 518057 (CN)**
• **YUE, Shang**
**Shenzhen, Guangdong 518057 (CN)**
• **YANG, Pu**
**Shenzhen, Guangdong 518057 (CN)**
• **WU, Yue**
**Shenzhen, Guangdong 518057 (CN)**
• **LI, Dingqian**
**Shenzhen, Guangdong 518057 (CN)**

(74) Representative: **EP&C**
**P.O. Box 3241**
**2280 GE Rijswijk (NL)**

(54) **REFRIGERATION SYSTEM OPERATION METHOD AND APPARATUS, DEVICE, AND STORAGE MEDIUM**

(57)     This application discloses a cooling system operating method and apparatus, a device, and a storage medium. The method includes: obtaining an open source data set of a cooling system, a plurality of components included in the cooling system having at least one target, and a parameter configured for each first component including a controllable operating parameter; determining an initial predictive model for predicting power consumption of the cooling system, and selecting a target algorithm by using an open toolbox to apply to the initial predictive model to predict the power consumption; training the initial predictive model by using the open source data set and the target algorithm, to obtain a target model which is deployed to a controller of the cooling system; the controller being configured to determine a power consumption optimization policy of the cooling system by using the target model, and controls operation of a corresponding first cooling component in the cooling system according to a parameter value corresponding to each controllable operating parameter defined by the determined power consumption optimization policy, to effectively reduce power consumption of the cooling system.

FIG. 2

## Description

RELATED APPLICATION

This application claims priority to Chinese Patent Application No. 2023107576139, filed with the China National Intellectual Property Administration on June 25, 2023 and entitled "COOLING SYSTEM OPERATING METHOD AND APPARATUS, DEVICE, AND STORAGE MEDIUM", which is incorporated herein by reference in its entirety.

FIELD OF THE TECHNOLOGY

This application relates to the field of Internet technologies, and specifically, to the field of artificial intelligence technologies, and in particular, to a cooling system operating method and apparatus, a device, and a storage medium.

BACKGROUND OF THE DISCLOSURE

With development of Internet technologies, a number of data centers continuously increases. Massive energy and a large number of cooling systems are needed to ensure normal operation of data centers. Energy consumption not only affects environment, but also causes high costs. Therefore, reducing overall energy consumption of data centers has become the focus of the sector. Total energy consumption of a data center usually includes energy consumption of Internet (IT) devices and energy consumption of systems such as cooling and power distribution systems. As can be seen, energy consumption of the cooling system directly affects overall energy consumption of the data center. By reducing energy consumption of the cooling system, energy consumption of the data center can be optimized. In view of this, how to reduce energy consumption of a cooling system becomes the focus of research.

SUMMARY

Embodiments of this application provide a cooling system operating method and apparatus, a device, and a storage medium, which can effectively reduce energy consumption of a cooling system.

According to one aspect, an embodiment of this application provides a cooling system operating method. The method includes:

obtaining an open source data set of a cooling system, the cooling system comprising a plurality of cooling components, to which one or more operating parameters are respectively assigned, the open source data set comprising a parameter value corresponding to the assigned parameter, the plurality of cooling components comprising at least one first cooling component, and the one or more parameters assigned to the first cooling component comprising a controllable operating parameter;

determining an initial predictive model for predicting power consumption for the cooling system, and selecting a target algorithm by using an open toolbox to apply to the initial predictive model to predict the power consumption;

training the initial predictive model by using the open source data set and the target algorithm, to obtain a target model which is deployed to a controller of the cooling system; and

the controller determines a power consumption optimization policy of the cooling system by using the target model, the power consumption optimization policy defining a parameter value corresponding to the controllable operating parameter of the at least one first cooling component; and

the controller controls operation of a corresponding first cooling component in the cooling system according to a parameter value corresponding to each controllable operating parameter defined by the determined power consumption optimization policy.

According to another aspect, an embodiment of this application provides a cooling system operating apparatus. The apparatus includes:

an obtaining unit, configured to obtain an open source data set of a cooling system, the cooling system comprising a plurality of cooling components, to which one or more operating parameters are respectively assigned, the open source data set comprising a parameter value corresponding to the assigned parameter, the plurality of cooling components comprising at least one first cooling component, and the one or more parameters assigned to the first cooling component comprising a controllable operating parameter; and

a processing unit, configured to determine an initial predictive model for predicting power consumption for the cooling system, and selecting a target algorithm by using an open toolbox to apply to the initial predictive model to predict the power consumption;

the processing unit being further configured to train the initial predictive model by using the open source data set and the target algorithm, to obtain a target model which is deployed to a controller of the cooling system; and

the controller being configured to determine a power consumption optimization policy of the cooling system by using the target model, the power consumption optimization policy defining a parameter value corresponding to the controllable operating parameter of the at least one first cooling component; and control operation of a corresponding first cooling component in the cooling system according to a parameter value corresponding to each controllable operating parameter defined by the determined power consumption optimization policy.

According to still another aspect, an embodiment of this application provides a computer device, including an input interface and an output interface, and further including:

a processor and a computer storage medium;

the processor being configured to implement one or more instructions, the computer storage medium storing the one or more instructions, and the one or more instructions being loaded by the processor to perform the following operations:

obtaining an open source data set of a cooling system, the cooling system comprising a plurality of cooling components, to which one or more operating parameters are respectively assigned, the open source data set comprising a parameter value corresponding to the assigned parameter, the plurality of cooling components comprising at least one first cooling component, and the one or more parameters assigned to the first cooling component comprising a controllable operating parameter;

determining an initial predictive model for predicting power consumption for the cooling system, and selecting a target algorithm by using an open toolbox to apply to the initial predictive model to predict the power consumption;

training the initial predictive model by using the open source data set and the target algorithm, to obtain a target model which is deployed to a controller of the cooling system; and

the controller being configured to determine a power consumption optimization policy of the cooling system by using the target model, the power consumption optimization policy defining a parameter value corresponding to the controllable operating parameter of the at least one first cooling component; and

the controller being configured to controls operation of a corresponding first cooling component in the cooling system according to a parameter value corresponding to each controllable operating parameter defined by the determined power consumption optimization policy.

According to still another aspect, an embodiment of this application provides a computer storage medium, having one or more instructions stored therein, the one or more instructions being loaded by a processor to perform the foregoing cooling system operating method.

According to still another aspect, an embodiment of this application provides a computer program product, including one or more instructions, when the one or more instructions in the computer program product are executed by a processor, the foregoing cooling system operating method being implemented.

In the embodiments of this application, the initial predictive model for predicting power consumption of the cooling system may be determined, the initial predictive model is trained to obtain the target model, and the model is deployed to the controller of the cooling system, so that the controller may determine the power consumption optimization policy of the cooling system by using the target model, and automatically and intelligently perform optimization control on power consumption of the cooling system by using the determined power consumption optimization policy, thereby effectively reducing power consumption of the cooling system. Further, the target algorithm for power consumption prediction is selected for the initial predictive model by using the open toolbox, so that processing logic of the initial predictive model may be whitebox to some extent. In this way, the power consumption optimization policy determined by using the target model obtained by training the initial predictive model has relatively high interpretability and reliability, so that optimization control may be accurately performed on power consumption of the cooling system by using the determined power consumption optimization policy, thereby facilitating power consumption reduction. In addition, the initial predictive model is trained by using the open source data set, so that a closed algorithm and closed security implementation can be avoided, and reliability of the target model obtained through training can be effectively improved, thereby further improving the reliability of the power consumption optimization policy obtained by using the target model and further facilitating power consumption reduction.

BRIEF DESCRIPTION OF THE DRAWINGS

FIG. 1a is a schematic structural diagram of a cooling system according to an embodiment of this application;

FIG. 1b is a schematic diagram of an operating architecture according to an embodiment of this application;

FIG. 1c is a schematic diagram of a working principle of an operating architecture according to an embodiment of this application;

FIG. 2 is a schematic flowchart of a cooling system operating method according to an embodiment of this application;

FIG. 3 is a schematic diagram of a principle for calculating a saved power consumption value according to an embodiment of this application;

FIG. 4a is a schematic diagram of various nodes in a network topology diagram according to an embodiment of this application;

FIG. 4b is a schematic diagram of a partial structure of a network topology diagram according to an embodiment of this application;

FIG. 5 is a schematic flowchart of a cooling system operating method according to another embodiment of this application;

FIG. 6 is a schematic structural diagram of a cooling system operating apparatus according to an embodiment of this application; and

FIG. 7 is a schematic structural diagram of a computer device according to an embodiment of this application.

## DESCRIPTION OF EMBODIMENTS

Technical solutions in embodiments of this application are clearly and completely described below with reference to the accompanying drawings in the embodiments of this application.

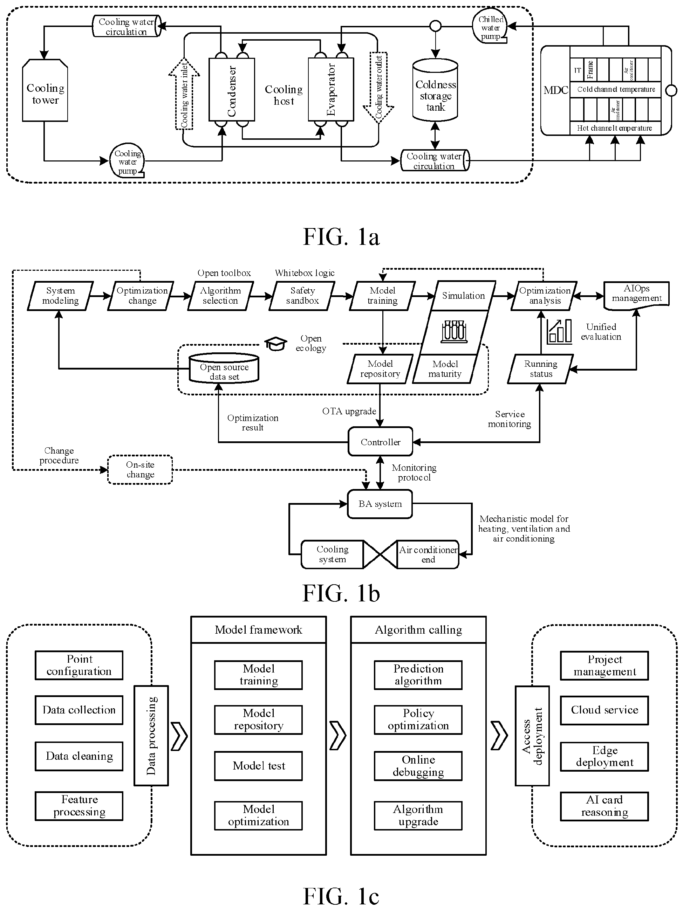

In the embodiments of this application, a cooling system is a system that removes heat from an object or a space by using a cooling device, to reduce a temperature of the corresponding object or space. A cooling system may be usually used in a place that needs to maintain a low-temperature environment, such as a data center equipment room or an office building. For ease of description, a cooling system in a data center is used as an example for description below. As shown in FIG. 1a, a cooling system includes components such as a cooling unit (including a cooling host), a cooling water pump, a chilled water pump, a cooling tower, a condenser, an evaporator, and a coldness storage tank. The core of the cooling system is the cooling unit, and the cooling unit extracts heat by circulating coolant and then discharges the heat, to achieve temperature reduction. Each component in the cooling system may have one or more parameters, a parameter that can support adjustment of a parameter value is a controllable operating parameter (or referred to as an adjustable operating parameter), and a component having the controllable operating parameter may be referred to as a first component.

For example, the cooling water pump may have parameters such as an operating status, a power, a water outlet amount, a number of operating pumps, and an operating frequency. Parameter values corresponding to the parameters such as the operating frequency, the operating status, and the number of operating pumps may all be adjusted. Therefore, these parameters are controllable operating parameters, and the cooling water pump is the first component. For another example, the cooling tower may have parameters such as a cooling water temperature difference, a number of operating towers, a water outlet amount, and an operating frequency, and the cooling host may have parameters such as a number of operating hosts, a cooling-side temperature difference, a current percentage, a chilled-side outlet water temperature, a power, and a return water temperature. Therefore, the number of operating towers and the operating frequency of the cooling tower, and the chilled-side outlet water temperature of the cooling host and the number of operating hosts are all controllable operating parameters, and the cooling tower and the cooling host are both first components.

FIG. 1a only exemplarily represents a system architecture of the cooling system and constitutes no limitation. An actual architecture of the cooling system may vary according to a service requirement, and a plurality of factors need to be considered for design and usage of an actual cooling system, such as a required cooling capacity, an ambient temperature, and efficiency and maintenance of a cooling unit. In addition, efficiency and energy saving performance of a cooling system are also the focus of the cooling sector. To improve efficiency and reduce energy consumption of a cooling system, some new technologies and materials are also applied for design and manufacturing of the cooling system, for example, renewable energy, high-efficiency coolant, and intelligent control.

For the foregoing cooling system, an embodiment of this application provides an operating architecture for energy saving optimization of the cooling system based on an AIOps technology. The operating architecture is designed based on best practices for a plurality of artificial intelligence (AI) energy saving projects and research and development architectures. The AIOps is abbreviation of artificial intelligence and operations and is a technology combining artificial intelligence (AI) and operations (Ops), and aims to improve operation efficiency and quality of Internet technologies (IT) in an automatic and intelligent manner. AI technologies involve a theory, a method, a technology, and an application system that use a digital computer or a machine controlled by the digital computer, to simulate, extend, and expand human intelligence, perceive an environment, obtain knowledge, and use knowledge to obtain an optimal result. In other words, AI is a comprehensive technology of computer science. AI mainly understands the essence of intelligence and studies design principles and implementation methods of various intelligent machines, to produce a new intelligent machine that can react in a way similar to human intelligence, to make intelligent machines have a plurality of functions such as perception, reasoning, and decision-making.

In other words, AIOps is an intelligent operating methodology developed from the idea of DevOps and driven by AI and is affected by site reliability engineer (SRE), and focuses on overall system reliability and emphasizes a one-stop platform, low code development, an automatic process, and security. DevOps mentioned herein is a combination word of development and operations, and is culture, movement, or convention that values communication and cooperation between "software developers (Dev)" and "Internet technology (IT) operation (Ops)", and uses automated "software delivery" and "architecture change" procedures, so that software can be constructed, tested, and released more quickly, frequently, and reliably. In conclusion, AIOps is a method of automating an IT operation process by using big data, machine learning, and other artificial intelligence technologies. AIOps aims to improve IT operation efficiency, reduce costs, reduce human errors, and improve service quality.

In the embodiments of this application, when an operating architecture for energy saving optimization of a cooling system is designed based on AIOps, at least basic principles in the following four thinkings are followed:

1. Product thinking: AI energy saving follows a standard product design thinking, focuses on design and manufacturing standards, and can be replicated in large-scale data center equipment rooms in batches.

2. Platform thinking: A visual development platform is supported, to connect development engineers, heating, ventilation and air conditioning experts, and algorithm experts. A low code development platform is supported, to support delivery engineers to implement instantiation configuration for specific projects. A centralized management platform is supported, to support operation experts to view a service status, an energy saving effect, and an emergency operation at any time.

3. Security thinking: A data center is a digital base that keeps continuous operation of key IT services, and exceeds a reliability requirement of 99.9999%. Therefore, AI energy saving follows a design policy of security-coverage-optimization, where security is a "first class" citizen of an operation architecture, then is compatible with a heterogeneous system of large-scale equipment rooms, and finally is oriented to an optimization idea of global optimization and sustainable optimization.

4. Open thinking: The operating architecture may support an open application programming interface (API), and may further have features such as componentization, whitebox, standardization, and pipeline. That is, the platform includes standard components, and the components have clear interface and indicator definitions. As long as components of a plurality of component suppliers meet performance and security requirements, components may replace each other. Besides, the platform follows a unified "pipeline", and each component forms a standard input/output filter.

Referring to FIG. 1b, a working principle of an operating architecture for energy saving optimization of a cooling system based on an AIOps technology according to an embodiment of this application is approximately as follows:

First, system modeling may be performed on a cooling system by using an open source data set, to obtain a modeling result. The open source data set is an open (that is, public) data set, and may include collected parameter values corresponding to one or more parameters of each component in the cooling system. The modeling result may include a digitalized system corresponding to the cooling system and an initial predictive model used for predicting power consumption of the cooling system. In some embodiments, because a physical system (a BA system) to which the cooling system belongs runs in several fixed operating modes for a long time, optimization change may further be added at a modeling stage, to try more number combinations and operating frequency ranges, so that AI has larger optimization space. Second, an algorithm may be selected for the initial predictive model by using an open toolbox, to select an algorithm (referred to as a target algorithm) that is applied to the initial predictive model for power consumption prediction. The open toolbox is an algorithm repository that is open and provides algorithm selection. In addition, the initial predictive model may be further restricted by using a security sandbox. Then, model training may be performed on the initial predictive model to obtain a target model, simulation test is performed on the target model, and optimization analysis is performed on a result of the simulation test by using an AIOps management module, to determine whether to perform model training on the target model again, to perform model optimization on the target model. After the target model is obtained, the target model may be deployed to a controller (which may also be referred to as an edge-end intelligent controller or an edge-end controller, which is an operating system that can control an operating status of the cooling system) by using a model repository, so that the controller can automatically and intelligently perform energy saving optimization control on the cooling system by using the target model.

Further, service monitoring may further be performed on the controller to obtain at least one of an operating status of the controller and an operating status of the target model in the controller, so that optimization analysis is performed according to the obtained operating status by using the AIOps management module, to determine whether to perform model training on the target model again. In addition, after the controller performs energy saving optimization control on the cooling system by using the target model, an energy saving effect of the target model may further be evaluated according to a unified energy saving effect evaluation policy by using the AIOps management module, to determine whether to perform model training on the target model again to update the target model. If the target model is updated, online upgrade (OTA upgrade) may be further performed on the target model in the controller based on the updated target model by using the model repository, to perform model optimization on the target model in the controller.

Based on the foregoing description, the working principle of the operating architecture for energy saving optimization of a cooling system based on an AIOps technology provided in the embodiments of this application may be roughly divided into the following several stages: data processing, model construction, simulation test, optimization control, active operation, and the like.

(1) Data processing stage. This stage mainly includes processing such as point configuration, data collection, data cleaning, feature extraction, data governance, and optimization change. The point configuration refers to configuring one or more points in the cooling system, and the point is used for collecting a parameter value of a component in the cooling system. The data collection refers to collecting working condition data of each configured point. Working condition data at any point refers to data collected at the corresponding point during working, and may include one or more parameter values. The data cleaning refers to performing data deduplication, data format conversion, abnormal data processing, and the like on each collected working condition data. The feature extraction refers to performing feature extraction on a result of data cleaning, to obtain an open source data set. The data governance refers to a process of improving data quality. The optimization change refers to a process of collecting more trusted valid data (that is, parameter values) by changing a site of a cooling system. The data governance and the optimization change are optional processing, that is, these two types of processing may not be performed at a data processing stage. In addition, a result obtained at the data processing stage is a trusted open source data set. Good data is key to training a good model.

(2) Model construction stage. This stage mainly includes processing such as algorithm selection, security sandbox processing, and model training. Algorithm selection refers to selecting an algorithm (that is, the target algorithm) for performing AI energy saving on a cooling system. The algorithm for AI energy saving may gradually develop from machine learning to neural networks (for example, a convolutional neural network (CNN), a recurrent neural network (RNN), and a long short-term memory (LSTM) neural network) and reinforcement learning. In addition, with the rise of a large language model (LLM), a transformer model (a model for improving a model training speed by using an attention mechanism) behind the LLM also starts to attract the attention of the field of industrial intelligence as a foundation model, so that the algorithm for AI energy saving may also be applicable to the transformer model. Security sandbox processing includes limiting an optimization process, limiting a data health degree, limiting an optimization result, setting a reasonable value range for parameter values corresponding to all controllable operating parameters and statuses, monitoring data quality and providing device alarms in real time, and performing overlimit check on parameter values outputted by a model. In some embodiments, in the security sandbox, the value range of the parameter value corresponding to the controllable operating parameter may be set by controlling a step size in a manner of "quick operating in small steps", to reduce fluctuation of the cooling system. Model training refers to optimizing a model parameter of an initial predictive model, and a model training process may be completed in a local development machine or a cloud graphic processing unit (GPU) server. Usually, one data center may correspond to one AI energy saving project, and a model for performing energy saving optimization on a cooling system in a corresponding data center may be trained for each AI energy saving project, and transfer learning may be performed on new data accumulated in an automatic training period, to ensure that the AI model performs optimization and reliable control within a boundary defined by a heating, ventilation and air conditioning expert.

(3) Simulation test stage. This stage mainly includes processing of performing simulation test on a target model obtained after model training. Generally, data for model training may be divided into a training set and a test set. The initial predictive model is trained by using the training set, and prediction precision (precision for short) of a target model obtained after training is tested by using the test set. However, it is very difficult to evaluate security and energy saving performance of a model by testing only based on static and limited data sets. If these models that are not fully evaluated are launched, this causes risk to reliable operation of a data center. Based on this, in the embodiments of this application, a simulation system may be obtained through system modeling. The simulation system includes a digital twin system that corresponds to a physical system of a cooling system and that is established by integrating a mechanistic model and a data drive. Precision of a target model is tested by using the simulation system. In addition, the simulation system may further respond to optimization control of the controller, to simulate an operating state of the cooling system during a period of time, so as to test energy saving performance of the target model according to a simulation result. By simulating a specific decision process of the AI model on a computer, an iteration speed of an optimization algorithm can be greatly increased, and comprehensive evaluation of the AI model can be ensured before real deployment.

(4) Optimization control stage. This stage mainly includes processing of performing, by the controller, optimization control on energy saving of the cooling system by using the target model. Specifically, the controller may calculate a power consumption optimization policy periodically(for example, 10 minutes by default) by using the target model. The power consumption optimization policy defines a parameter value of a controllable operating parameter of at least one first component. In addition, a control command is delivered to a corresponding component in the cooling system by using an interface of a protocol (an interface of a protocol such as BACNet (a communications protocol for intelligent buildings), Snmp (remote network monitoring), and Modbus (application layer packet transmission)), so that the corresponding component adjusts an operating status according to a parameter value corresponding to each controllable operating parameter defined by the power consumption optimization policy, to implement optimization control on energy saving of the cooling system. To satisfy requirements of data security and local control, an owner and an operator of a data center may require that an AI model can be deployed on a local server or a local AI algorithm card (an AI card for short) and can be run offline.

(5) Active operation stage. This stage mainly includes monitoring at least one of an operating status of a controller and an operating status of a target model in the controller, to perform software or hardware fault self-diagnosis on at least one of the controller and the target model, and actively perform closed-loop maintenance processing on a fault point obtained through diagnosis. A cooling system is a key facility for ensuring sustainable operation of an IT service. For a complex AI+BA system, a potential failure mode needs to be analyzed in advance and an emergency operation plan needs to be developed, and a device fault and a system abnormality are simulated during pre-production test. Especially, a local cluster or hot standby needs to be supported to ensure high availability of energy saving of AI, and a watchdog may be configured for the AI model to regularly report an operating status (which may also be referred to as a service status) to the active operation system, so that the active operation system may implement a procedure of software or hardware fault self-diagnosis and closed-loop maintenance according to the reported operating status, and complete repair and maintenance and service recovery in a service level agreement (SLA).

As can be seen based on the related description of the foregoing several stages, the operating architecture for energy saving optimization of a cooling system based on an AIOps technology provided in the embodiments of this application covers a full life cycle of data, a model, training, test, deployment, operation, and maintenance, as shown in FIG. 1c. Policy optimization mentioned in algorithm calling in FIG. 1c refers to processing of determining a power consumption optimization policy of a cooling system. Online debugging refers to opening up a capability of an algorithm model (that is, a target model) and providing API usage, to facilitate debugging verification of performance of the target model and make the target model available for usage by other services. Algorithm upgrade may include OTA upgrade on the target model in the controller described above. Edge deployment mentioned in access deployment in FIG. 1c refers to deploying an algorithm and a target model to a controller. The controller is a small operating system. AI card reasoning refers to inserting, into the controller, an AI card specialized for an algorithm program to call model calculation, to search for an optimal power consumption optimization policy.

As can be seen based on the foregoing description, the operating architecture for energy saving optimization of a cooling system based on an AIOps technology provided in the embodiments of this application may bring new opportunities and advantages to energy management of a data center. By using open data and algorithm simulation models, not only data can be managed and used better to improve data value and efficiency and accelerate an AI iteration speed, but also an industry engineer of a data center can better understand an operating principle and performance characteristics of a cooling system based on the open data and models, thereby connecting academic and industrial communities and optimizing energy efficiency of the cooling system more precisely. In addition, a closed algorithm and closed security implementation are avoided, and collaborative work and knowledge sharing between data centers may be implemented, thereby improving energy efficiency and sustainable development, and implementing more efficient energy management and energy saving and emission reduction.

In addition, the operating architecture, as an innovative AI energy saving architecture, may further provide a more efficient and reliable operating solution for a power usage effectiveness (PUE) optimization project of a cooling system of a data center, to promote sustainable development of the data center. PUE is an indicator for evaluating energy efficiency of a data center, and is equal to a ratio of all energy consumed by the data center (that is, total energy consumption) to energy consumed by a device (IT device) load of the data center (that is, IT device energy consumption), that is, PUE = total energy consumption of the data center/IT device energy consumption. Total energy consumption of a data center includes energy consumption of IT devices and energy consumption of systems such as cooling and power distribution systems. As can be seen, a value of PUE is greater than 1, and as a value of PUE is closer to 1, it indicates less energy consumption of non-IT devices, thereby indicating higher energy efficiency of the data center.

The foregoing merely exemplarily describes the general principle of the operating architecture for energy saving optimization of a cooling system based on an AIOps technology provided in the embodiments of this application, which is not limited thereto. For example, in an actual application, the operating architecture may further standardize metadata such as a data point, a data set, an algorithm, and a model, and construct the metadata into a network topology diagram, so that data can be managed and used better by using the network topology diagram, thereby improving data value and efficiency. In addition, the operating architecture may further automatically and intelligently improve operation efficiency and quality of an AI energy saving project by using an AIOps technology, and further improve efficiency of key links such as data processing, model construction, simulation test, optimization control, and active operation based on a network topology structure of metadata, thereby implementing rapid deployment and stable operation and providing a more efficient and reliable solution for sustainable development of a data center. In this automatic and intelligent operation manner, interference from human factors can be reduced, the precision and efficiency of energy management in a data center can be improved, and operation costs and human resource demand can also be reduced.

It has been shown through practice that the operating architecture for energy saving optimization of a cooling system based on AIOps provided in the embodiments of this application may bring beneficial effects in a plurality of aspects, which may specifically include, but are not limited to, the following several aspects:

1. Improve energy efficiency: Intelligent management and optimization are performed on a cooling system of a data center by using the AIOps technology, so that unnecessary energy waste can be effectively reduced and energy efficiency can be improved, thereby implementing energy saving optimization of the data center.

2. Improve operation efficiency of a data center: Automated operation is implemented by using the AIOps technology, so that a fault can be quickly and accurately diagnosed and resolved, operation efficiency of a data center is improved, and operation costs are reduced. In addition, in the technical solution of the operating architecture, data sharing and interconnection can be performed between different devices and systems, thereby further improving operation efficiency of the data center.

3. Improve data center security: Real-time monitoring and warning are performed on a data center (for example, a controller or a target model in the controller) by using the AIOps technology, so that potential security hazards can be quickly identified and corresponding measures can be taken, thereby improving security and stability of the data center and reducing security accident risk.

4. Improve user experience: Through intelligent management of the AIOps technology, service quality and a response speed of a data center can be improved, and user satisfaction and experience can be improved.

In conclusion, the technical solution of the operating architecture for energy saving optimization of a cooling system of a data center based on the AIOps technology can bring beneficial effects in a plurality of aspects, including improving energy efficiency, improving operation efficiency of a data center, improving data center security, and improving user experience. These effects help push the data center to develop in a greener and more sustainable direction, and make contributions to environment protection and sustainable development.

The methodology of the operating architecture for energy saving optimization of a cooling system based on AIOps provided in the embodiments of this application may further be applied to various other fields and sectors, such as finance, healthcare, and industry. Using the finance sector as an example, data resources from different financial institutions may be integrated and shared by constructing an operating architecture system, thereby more accurately performing risk evaluation and credit rating, and improving risk control and service efficiency of financial institutions. In the healthcare sector, the operating architecture system may be configured to integrate electronic medical data of medical institutions, thereby implementing optimized configuration of medical resources. In the industry field, the operating architecture system may be configured to manage and optimize data flow and conversion in an industrial production process, thereby improving production efficiency and quality. Further, in a specific implementation of applying the operating architecture to other fields and sectors, if data related to user privacy is involved, when the foregoing method embodiments are applied to specific products or technologies, permission or consent of the user needs to be obtained to collect the related data, and collection, use, and processing of the related data need to comply with relevant laws, regulations, and standards of related regions.

Based on the foregoing related description of the operating architecture for energy saving optimization of a cooling system based on the AIOps technology, an embodiment of this application provides a cooling system operating method. The cooling system operating method may be performed by a computer device. The computer device may be a terminal or a server. Alternatively, the cooling system operating method may be jointly performed by a terminal and a server. This is not limited thereto. The terminal may be a smartphone, a computer (for example, a tablet computer, a notebook computer, or a desktop computer), a smart wearable device (for example, a smartwatch or smart glasses), a smart voice interaction device, a smart appliance (for example, a smart TV), a vehicle-mounted terminal, or an aircraft. The server may be a stand-alone physical server, may be a server cluster or a distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. Further, the terminal and the server may be located inside a blockchain network or outside a blockchain network. This is not limited. Further, the terminal and the server may further upload any data stored therein to the blockchain network for storage, to prevent the data stored therein from being tampered and improve data security.

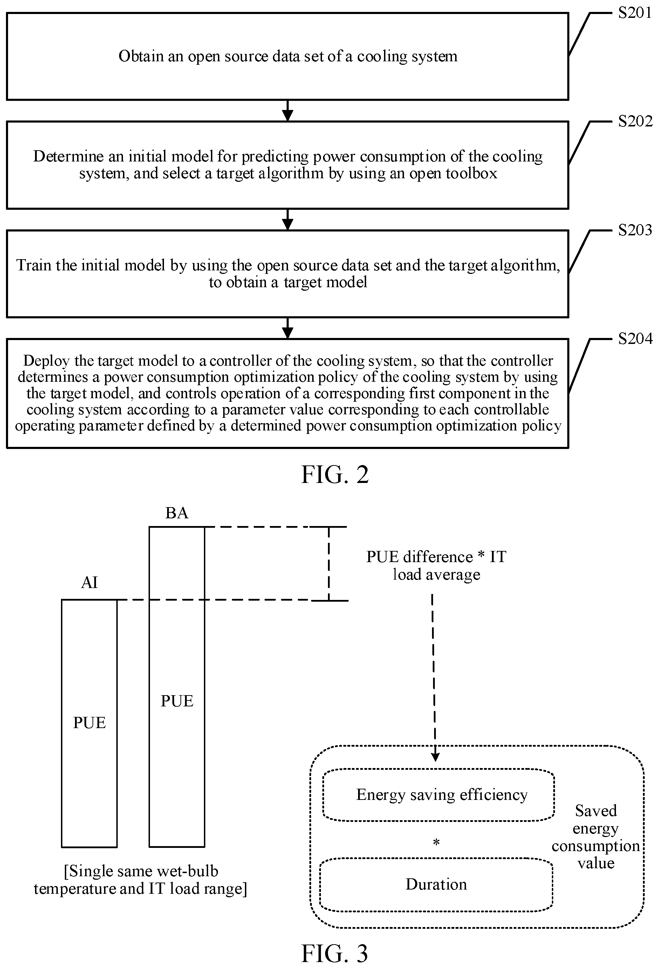

For ease of description, an example in which a computer device performs the cooling system operating method is used subsequently for description. Referring to FIG. 2, the cooling system operating method may include the following operations S201 to S204:

S201: Obtain an open source data set of a cooling system.

In a specific implementation, when performing operation S201, the computer device may obtain the open source data set of the cooling system from an open data platform through the Internet. Alternatively, based on the foregoing related description of the operating architecture, when performing operation S201, the computer device may configure a point in the cooling system, where one component in the cooling system may have one or more points, and one point may be configured to collect a parameter value corresponding to one parameter of one component; collect working condition data at each configured point, where working condition data at any point includes a parameter value corresponding to one parameter of one component; and perform processing such as data cleaning and feature extraction on the collected working condition data, to obtain the open source data set of the cooling system.

Cooling systems of different architectures may correspond to different point configurations. Besides, the computer device may configure a point in each component in the cooling system according to opinions of onsite engineers, to obtain a plurality of points. One component is configured with one or more points, and one point is configured to collect a parameter value corresponding to one parameter configured for a corresponding component. The open source data set obtained in operation S201 may include a parameter value corresponding to a parameter configured for each component in the cooling system. The plurality of components included in the cooling system include at least one first component, a parameter configured for each first component includes a controllable operating parameter, and any parameter supporting parameter value adjustment may be used as a controllable operating parameter.

For example, if the cooling system includes a chilled water pump, a point configured for the chilled water pump may include, but is not limited to: a point for collecting a parameter value (that is, a power value) corresponding to a power parameter of the chilled water pump, a point for collecting a parameter value (that is, an operating frequency value) corresponding to an operating frequency parameter of the chilled water pump, a point for collecting a parameter value (that is, an operating status value) corresponding to an operating status parameter of the chilled water pump, a point for collecting a parameter value corresponding to a parameter of a number of operating chilled water pumps, and the like. In this case, the component, that is, the chilled water pump is a first component, and a controllable operating parameter of parameters configured for the chilled water pump may include: an operating frequency of the chilled water pump, an operating status of the chilled water pump, a number of operating chilled water pumps, and the like.

For another example, if the cooling system includes a cooling tower, a point configured for the cooling tower may include, but is not limited to: a point for collecting a parameter value (that is, an operating frequency value) corresponding to an operating frequency parameter of the cooling tower, a point for collecting a parameter value (that is, a power value) corresponding to a power parameter of the cooling tower, a point for collecting a parameter value (that is, an operating status value) corresponding to an operating status parameter of the cooling tower, a point for collecting a parameter value corresponding to a parameter of a number of operating cooling towers, and the like. In this case, the component, that is, the cooling tower is a first component, and a controllable operating parameter of parameters configured for the cooling tower may include: an operating frequency of the cooling tower, an operating status of the cooling tower, a number of operating cooling towers, and the like.

For another example, if the cooling system includes a cooling host, a point configured for the cooling host may include, but is not limited to: a point for collecting a parameter value (that is, a power value) corresponding to a power parameter of the cooling host, a point for collecting a parameter value (a current percentage value) corresponding to a current percentage parameter of the cooling host, a point for collecting a parameter value (a chilled-side outlet water temperature value) corresponding to a chilled-side outlet water temperature parameter of the cooling host, a point for collecting a parameter value (a chilled-side outlet water pressure value) corresponding to a chilled-side outlet water pressure parameter of the cooling host, a point for collecting a parameter value (a chilled-side inlet water temperature value) corresponding to a chilled-side inlet water temperature parameter of the cooling host, a point for collecting a parameter value (a chilled-side inlet water pressure value) corresponding to a chilled-side inlet water pressure parameter of the cooling host, a point for collecting a parameter value (a cooling-side outlet water temperature value) corresponding to a cooling-side outlet water temperature parameter of the cooling host, a point for collecting a parameter value (a cooling-side outlet water pressure value) corresponding to a cooling-side outlet water pressure parameter of the cooling host, a point for collecting a parameter value (a cooling-side inlet water temperature value) corresponding to a cooling-side inlet water temperature parameter of the cooling host, a point for collecting a parameter value (a cooling-side inlet water pressure value) corresponding to a cooling-side inlet water pressure parameter of the cooling host, a point for collecting a parameter value (a cooling-side temperature difference value) corresponding to a cooling-side temperature difference parameter of the cooling host, and the like. **In** this case, the component, that is, the cooling host is a first component, and a controllable operating parameter of parameters configured for the cooling host may include: a chilled-side water outlet temperature of the cooling host, a chilled-side water outlet pressure of the cooling host, a chilled-side water inlet pressure of the cooling host, a cooling-side water outlet pressure of the cooling host, a cooling-side water inlet pressure of the cooling host, and the like.

S202: Determine an initial predictive model for predicting power consumption for the cooling system, and select a target algorithm by using an open toolbox to apply to the initial predictive model to predict the power consumption.

In a specific implementation, a model may be uniformly set for each component in the cooling system. In this case, the initial predictive model may be an independent model. Alternatively, at least one sub-model may be separately configured for each component in the cooling system. In this case, the initial predictive model may be understood as a system model obtained by combining sub-models corresponding to the components. That is, the initial predictive model may include: a sub-model configured for each component in the cooling system. **In** this case, any two sub-models in the initial predictive model may be independent of each other, or may have a coupling relationship. When the first component and a second component are connected, a sub-model corresponding to the first component may be coupled to a sub-model corresponding to the second component, and the first component and the second component are two different components in the cooling system. Further, when any sub-model (assuming a sub-model a) is coupled to another sub-model (assuming a sub-model b), an output of the any sub-model (that is, the sub-model a) is used as an input of the another sub-model (that is, the sub-model b).

For example, it is assumed that for the component, that is, the cooling tower, a plurality of sub-models such as a cooling water temperature difference prediction model of the cooling tower and a power prediction model of the cooling tower may be configured; and for the component, that is, the cooling host, a plurality of sub-models such as a cooling-side return water temperature prediction model of the cooling host and a power prediction model of the cooling host may be configured. Because an output of the cooling tower flows into the cooling host, that is, the cooling tower is connected to the cooling host, the cooling water temperature difference prediction model of the cooling tower is coupled to the power prediction model of the cooling host, that is, an output of the cooling water temperature difference prediction model of the cooling tower may be used as an input of the power prediction model of the cooling host. In some embodiments, considering that a power of the cooling host is related to a cooling-side return water temperature of the cooling host, the cooling-side return water temperature prediction model of the cooling host may also be coupled to the power prediction model of the cooling host, that is, an output of the cooling-side return water temperature prediction model of the cooling host may also be used as an input of the power prediction model of the cooling host.

When the initial predictive model includes a plurality of sub-models, the target algorithm selected in operation S202 includes: a prediction algorithm used by each sub-model in the initial predictive model, where the prediction algorithm is an algorithm for performing prediction or classification according to model input data. A prediction algorithm used by any sub-model is used for predicting, according to an inputted parameter value corresponding to each parameter, a parameter value corresponding to a preset target parameter. Target parameters related to prediction algorithms used by different sub-models are different. For example, for the sub-model, that is, the power prediction model of the cooling host configured for the cooling host, a prediction algorithm used by the sub-model is used for predicting, according to inputted parameter values corresponding to a plurality of parameters such as a cooling-side return water temperature of the cooling host and a cooling water temperature difference of the cooling tower, a parameter value corresponding to the target parameter, that is, a power of the cooling host.

When the initial predictive model includes a plurality of sub-models and the target algorithm includes a prediction algorithm used by each sub-model, the sub-models in the initial predictive model use respective prediction algorithms to cooperatively predict power consumption of the cooling system. Specifically, the plurality of sub-models included in the initial predictive model include at least one target sub-model, a target parameter related to a prediction algorithm used by the target sub-model includes a system power consumption parameter, and a parameter value corresponding to the system power consumption parameter is used for representing power consumption of the cooling system. When cooperatively predicting power consumption of the cooling system, a $p^{th}$ sub-model in the initial predictive model may use a corresponding prediction algorithm to predict, according to an inputted parameter value, a parameter value of a target parameter related to the prediction algorithm used by the $p^{th}$ sub-model. If the $p^{th}$ sub-model is coupled to another $q^{th}$ sub-model, the predicted parameter value may be inputted to the $q^{th}$ sub-model, so that the $q^{th}$ sub-model may use a corresponding prediction algorithm to predict, according to the inputted parameter value, a parameter value of a target parameter related to the prediction algorithm used by the $q^{th}$ sub-model, and so on, until the target sub-model performs a prediction operation to output power consumption of the cooling system. As can be seen, when power consumption is predicted by using the initial predictive model, the sub-models are sequentially called to perform related prediction according to a coupling relationship between the sub-models, to predict power consumption of the cooling system by using the target sub-model. In this way, the finally predicted power consumption can better indicate an actual operating status of the cooling system, thereby improving the accuracy of power consumption prediction.

In a specific implementation, when selecting an algorithm for the initial predictive model by using the open toolbox, the computer device may select a suitable algorithm according to a specific application scenario. Further, a plurality of factors, such as a data type, data distribution, algorithm complexity, and algorithm accuracy, may be considered in algorithm selection. For example, the target algorithm includes a prediction algorithm used by a sub-model corresponding to each component. It is assumed that the open toolbox may provide a plurality of algorithms such as a rule-based algorithm, a statistics-based algorithm, and a neural network-based algorithm.

In this case, for the component, that is, the chilled water pump, a power prediction model of the chilled water pump configured for the chilled water pump is used for predicting a power of the chilled water pump. It can be known that a larger operating frequency of the chilled water pump indicates higher power consumption of the chilled water pump, that is, it is known that the operating frequency and the power consumption of the chilled water pump are strongly correlated. Therefore, a prediction algorithm selected for the power prediction model of the chilled water pump may be a rule-based algorithm.

For the component, that is, the cooling host, a power prediction model of the cooling host configured for the cooling host is used for predicting a power of the cooling host. The power of the cooling host is related to all of a chilled-side water inlet temperature, a chilled-side water outlet temperature, a chilled-side water inlet pressure, a chilled-side water outlet pressure, a cooling-side water inlet temperature, a cooling-side water outlet temperature, a cooling-side water inlet pressure, a cooling-side water outlet pressure, and the like. In this case, it is difficult to determine the power of the cooling host according to these parameters based on a rule. Therefore, a prediction algorithm selected for the power prediction model of the cooling host may be a statistics-based algorithm. When output data of a sub-model is related to specific data, a prediction algorithm selected for the sub-model may be a neural network-based algorithm, so that a relationship between input data and an output of the corresponding sub-model may be automatically learned by using the algorithm.

S203: Train the initial predictive model by using the open source data set and the target algorithm, to obtain a target model which is deployed to a controller of the cooling system.

In a specific implementation, the computer device can first train the initial predictive model by using the open source data set and the target algorithm, to obtain an intermediate model. Specifically, if the initial predictive model includes a plurality of sub-models, the intermediate model includes an intermediate sub-model obtained by training each sub-model. In this case, the target algorithm includes a prediction algorithm used by each sub-model, and each prediction algorithm indicates parameter values that input data of the model needs to include. Therefore, for any sub-model, the computer device may construct training data of the any sub-model and label information of the training data according to an indication of a prediction algorithm used by the any sub-model and the open source data set. The training data includes parameter values indicated by the corresponding prediction algorithm. The label information of the training data includes: a parameter value that is obtained based on the open source data set and that corresponds to a target parameter related to the prediction algorithm. Then, the any sub-model is trained based on the training data and the corresponding label information in a supervised training manner. Specifically, any sub-model may be called to predict, according to training data by using a prediction algorithm, a parameter value corresponding to a target parameter, and a model parameter of the any sub-model is optimized according to a difference between the predicted parameter value and label information, to train the any sub-model to obtain a corresponding intermediate sub-model.

For example, for the sub-model, that is, the power prediction model of the chilled water pump, a prediction algorithm used by the sub-model is used to predict, according to a parameter value corresponding to the operating frequency parameter of the chilled water pump, a parameter value corresponding to the target parameter, that is, a power of the chilled water pump. Therefore, the parameter value (that is, the operating frequency value) corresponding to the operating frequency parameter of the chilled water pump can be obtained from the open source data set as training data of the power prediction model of the chilled water pump, and the parameter value (that is, the power value) corresponding to the power parameter of the chilled water pump can be obtained from the open source data set as label information of the training data. Then, the power prediction model of the chilled water pump may be called to predict a power value of the chilled water pump according to the operating frequency value in the training data by using the corresponding prediction algorithm. Therefore, a model parameter of the power prediction model of the chilled water pump is optimized according to a difference between the predicted power value and the power value in the label information, to train the power prediction model of the chilled water pump.

After the intermediate model is obtained, the intermediate model may be directly used as the target model. Further, to ensure that the target model has relatively good performance, after obtaining the intermediate model, the computer device may further perform a performance test on the intermediate model by using a simulation system, to obtain a test result. The intermediate model is used as the target model if the test result indicates that the intermediate model passes the performance test; or the intermediate model may be trained to obtain the target model if the test result indicates that the intermediate model fails the performance test. A manner of training the intermediate model is similar to a manner of training the initial predictive model, and details are not described herein again. The simulation system described herein includes: a digital twin system that is established by integrating a mechanistic model and a data drive and that corresponds to the cooling system. The mechanistic model is also referred to as a whitebox model, and is a model obtained by modeling components (devices) through big data-driven learning according to physical features of components (devices) in the cooling system. Data driving may be understood as processing of configuring working condition data of each component in the cooling system on each digitalized component in a model obtained through modeling. The simulation system constructed in this manner can avoid a relatively large error or even an abnormality in a working condition in which history data does not appear.

The performance test on the intermediate model by using the simulation system may include but is not limited to: precision performance test, energy saving performance test, and the like. Based on this, when the intermediate model includes the intermediate sub-model obtained by performing model training on each sub-model, a specific implementation of performing a performance test on the intermediate model by using the simulation system, to obtain a test result may include at least one of the following implementations:

Implementation 1: obtaining, for a $k^{th}$ intermediate sub-model in the intermediate model, test data of the $k^{th}$ intermediate sub-model by operating the simulation system; and testing precision performance of the $k^{th}$ intermediate sub-model by using the test data, to obtain a test result, where $k \in [1, K]$, and $K$ is a number of intermediate sub-models included in the intermediate model. Whether the $k^{th}$ intermediate sub-model has relatively high precision may be tested through precision performance test. In this way, when it is determined that the precision of the $k^{th}$ intermediate sub-model is relatively low, model training is further performed on the $k^{th}$ intermediate sub-model, so that the precision of the finally obtained $k^{th}$ sub-model in the target model is relatively high, thereby improving model precision performance.

Implementation 2: controlling operation of the simulation system in a preset time period by using the intermediate model. Specifically, each component in the simulation system may be run; a power consumption optimization policy of the simulation system is periodically calculated in the preset time period by using the intermediate model; and each time a power consumption optimization policy is calculated, operation of a corresponding first component in the simulation system is controlled according to a parameter value corresponding to each controllable operating parameter defined by the currently calculated power consumption optimization policy. Specifically, the parameter value corresponding to each controllable operating parameter defined by the currently calculated power consumption optimization policy may be used to update a parameter value corresponding to a controllable operating parameter of the corresponding first component in the simulation system, so that the corresponding first component in the simulation system can run according to the parameter value corresponding to each controllable operating parameter defined by the currently calculated power consumption optimization policy. In this embodiment of this application, the power consumption optimization policy of the simulation system is periodically calculated by using the intermediate model, so that consumption of a large number of processing resources due to real-time calculation of the power consumption optimization policy can be avoided, thereby saving processing resources. Besides, this can avoid that the computer device runs slowly due to usage of a large number of processing resources. A manner of calculating the power consumption optimization policy of the simulation system by using the intermediate model may be: generating a plurality of parameter combinations according to a policy optimization algorithm, where each parameter combination includes a parameter value corresponding to each controllable operating parameter; calling the intermediate model to predict power consumption of the simulation system according to each parameter combination; and selecting one parameter combination from a plurality of parameter combinations as the power consumption optimization policy of the simulation system according to predicted power consumption of the simulation system in each parameter combination.

Target energy consumption statuses of the data center in the preset time period are counted after the preset time period ends. The data center generates a plurality of pieces of environmental data in the preset time period, and one piece of environmental data is a combination of one same wet-bulb temperature and one device load interval. The target energy consumption status includes: an energy efficiency indication value of the data center in each of the plurality of pieces of environmental data. The energy efficiency indication value is a ratio (that is, a PUE value) of all energy consumed by the data center to energy consumed by a device load of the data center. The device load may be understood as power of an IT device. Then, a reference energy consumption status of the data center may be obtained, where the reference energy consumption status includes: an energy efficiency indication value of the data center in each of the plurality of pieces of environmental data in a case that the intermediate model is not used. Then, energy saving performance of the intermediate model may be tested according to the target energy consumption statuses and the reference energy consumption status, to obtain the test result. Whether the intermediate model has relatively high energy saving performance may be tested through energy saving performance test. In this way, when it is determined that the energy saving performance of the intermediate model is relatively low, the intermediate model is further trained, so that the finally obtained target model has relatively high energy saving performance.

When testing energy saving performance of the intermediate model according to the target energy consumption status and the reference energy consumption status, to obtain the test result, the computer device may determine a similarity between the target energy consumption status and the reference energy consumption status. If the similarity is greater than a similarity threshold, a test result for indicating that the intermediate model fails the performance test may be generated. If the similarity is less than or equal to the similarity threshold, a test result for indicating that the intermediate model passes the performance test may be generated. Further, the similarity between the target energy consumption status and the reference energy consumption status may be measured by using a number of pieces of abnormal environmental data, where the abnormal environmental data is environmental data satisfying the following condition: a difference between the energy efficiency indication value corresponding to the target energy consumption status and the energy efficiency indication value corresponding to the reference energy consumption status is less than a preset value. That is, if a difference between an energy efficiency indication value corresponding to environmental data in the target energy consumption status and an energy efficiency indication value corresponding to the environmental data in the reference energy consumption status is less than the preset value, the environmental data may be used as abnormal environmental data.

Alternatively, when performing an energy saving performance test on the intermediate model according to the target energy consumption status and the reference energy consumption status, to obtain the test result, the computer device may perform the following operations s11 and s12:

s11: Perform energy saving evaluation on the intermediate model according to the target energy consumption statuses and the reference energy consumption status, to obtain a target saved energy consumption value of the intermediate model.

Energy saving is a very important task during operating of a data center. This is because it can reduce operating costs of the data center, reduce impact on the environment, and prolong the service life of a hardware device. Based on this, in the operating architecture system provided in the embodiments of this application, an energy saving calculation formula is provided, so that the computer device may calculate the target saved energy consumption value of the target model by using the energy saving calculation formula. The energy saving calculation formula may help an administrator of a data center to perform quantitative evaluation on the effect of energy saving optimization. Specifically, the specific effect of energy saving optimization may be calculated by comprehensively considering a plurality of factors such as IT load power consumption, a temperature, and a humidity of the data center. The energy saving calculation formula helps an administrator of a data center better understand whether energy saving optimization efforts achieve an expected effect, and develop a more effective energy saving policy according to the data, thereby implementing more sustainable operating of the data center. The energy saving calculation formula is defined as follows:

$$ES = \sum_{R_1}^{R_n} (PUE\,\mathrm{a}_i - PUE\,\mathrm{b}_i) * IT_i * L_i$$

.

ES represents a target saved energy consumption value of a cooling system, $R_i$ represents a combination of an $i^{th}$ same wet-bulb temperature and an IT load interval (that is, an $i^{th}$ piece of environmental data), a value of i ranges from 1 to n, and n is a number of pieces of environmental data. PUE is a ratio (that is, an energy efficiency indication value) of all energy consumed by a data center to energy consumed by an IT load, $PUEa_i$ represents PUE corresponding to the $i^{th}$ piece of environmental data before energy saving optimization (that is, an energy efficiency indication value corresponding to the $i^{th}$ piece of environmental data in a reference energy consumption status), PUEbi represents PUE of the $i^{th}$ piece of environmental data after energy saving optimization (that is, an energy efficiency indication value corresponding to the $i^{th}$ piece of environmental data in a target energy consumption status), $IT_i$ represents an IT load average (that is, a device load average) corresponding to the $i^{th}$ piece of environmental data, and $L_i$ represents an operating duration of energy saving comparison in the $i^{th}$ piece of environmental data (that is, a duration of the $i^{th}$ piece of environmental data). AI system (that is, the intermediate model) control and BA system control of a cooling system are used as comparative examples. A schematic diagram of calculating a saved energy consumption value of the intermediate model in a single same wet-bulb temperature and IT load interval (that is, a single piece of environmental data) may be shown in FIG. 3.

Based on the related description of the energy saving calculation formula, a specific manner in which the computer device performs operation s11 may be as follows: A plurality of pieces of environmental data generated by a data center in a preset time period are traversed, and currently traversed environmental data is determined as current environmental data. A device load average corresponding to the current environmental data is determined. Specifically, the device load average corresponding to the current environmental data may be determined according to empirical history values, or a maximum load value and a minimum load value corresponding to a device load interval in the current environmental data may be determined, and an averaging operation is performed on the determined maximum load value and minimum load value, to obtain the device load average corresponding to the current environmental data. Then, energy saving efficiency of the intermediate model in the current environmental data may be calculated according to an energy efficiency indication value corresponding to the current environmental data in the target energy consumption status, an energy efficiency indication value corresponding to the current environmental data in the reference energy consumption status, and the device load average corresponding to the current environmental data. Specifically, a difference operation may be performed on the energy efficiency indication value corresponding to the current environmental data in the target energy consumption status and the energy efficiency indication value corresponding to the current environmental data in the reference energy consumption status; and a multiplication operation may be performed on a difference operation result and the device load average corresponding to the current environmental data, to obtain the energy saving efficiency of the intermediate model in the current environmental data.

After the energy saving efficiency of the intermediate model in the current environmental data is calculated, a saved energy consumption value of the intermediate model in the current environmental data may be calculated according to the calculated energy saving efficiency and a duration of the current environmental data in the preset time period. Specifically, a multiplication operation may be performed on the calculated energy saving efficiency and the duration of the current environmental data in the preset time period, to obtain the saved energy consumption value of the intermediate model in the current environmental data. Saved energy consumption values of the intermediate model in all the plurality of pieces of environmental data may be integrated after all the environmental data is traversed, to obtain the target saved energy consumption value of the intermediate model.

s12: Test energy saving performance of the intermediate model based on the target saved energy consumption value of the intermediate model and a preset energy saving condition, to obtain a test result.

The preset energy saving condition may be used to indicate: the target saved energy consumption value of the intermediate model is greater than or equal to a preset saved energy consumption value. In this case, when testing energy saving performance of the intermediate model based on the target saved energy consumption value of the intermediate model and the preset energy saving condition, to obtain a test result, the computer device may compare the target saved energy consumption value of the intermediate model with the preset saved energy consumption value; and generate, if the target saved energy consumption value of the intermediate model is greater than or equal to the preset saved energy consumption value, a test result for indicating that the intermediate model passes the performance test; or generate, if the target saved energy consumption value of the intermediate model is less than the preset saved energy consumption value, a test result for indicating that the intermediate model fails the performance test. As can be seen, in this embodiment of this application, energy saving performance of the intermediate model is tested based on the value relationship between the preset saved energy consumption value and the target saved energy consumption value, so that a testing process can be simplified and testing efficiency can be improved.

Alternatively, the preset energy saving condition may be used to indicate: a difference between the target saved energy consumption value and a history saved energy consumption value of the intermediate model needs to be greater than a target value. The target value may be set according to an empirical value, and the history saved energy consumption value is a saved energy consumption value generated by energy saving logic of the cooling system when the intermediate model is not used. In this case, when testing energy saving performance of the intermediate model based on the target saved energy consumption value of the intermediate model and the preset energy saving condition, to obtain a test result, the computer device may calculate a difference between the target saved energy consumption value of the intermediate model and the history saved energy consumption value, and if the difference is greater than a target value, generate a test result for indicating that the intermediate model passes the performance test, or if the difference is less than the target value, generate a test result for indicating that the intermediate model fails the performance test.

S204: Deploy the target model to a controller of the cooling system, so that the controller determines a power consumption optimization policy of the cooling system by using the target model, the power consumption optimization policy defining a parameter value corresponding to a controllable operating parameter of at least one first component, and controls operation of a corresponding first component in the cooling system according to the parameter value corresponding to each controllable operating parameter defined by the determined power consumption optimization policy.

During specific implementation, after the computer device deploys the target model to the controller of the cooling system, the controller may periodically (for example, 10 minutes by default) determine a power consumption optimization policy of the cooling system by using the target model, to control operation of a corresponding first component in the cooling system according to a parameter value corresponding to each controllable operating parameter defined by the determined power consumption optimization policy. A manner of controlling, by the controller, operation of a corresponding first component in the cooling system according to a parameter value corresponding to each controllable operating parameter defined by the determined power consumption optimization policy may be: updating, by using the parameter value corresponding to each controllable operating parameter defined by the determined power consumption optimization policy, a parameter value corresponding to a controllable operating parameter of a corresponding first component in the cooling system, so that the corresponding first component in the cooling system runs according to the parameter value corresponding to each controllable operating parameter defined by the determined power consumption optimization policy.

A process of determining, by the controller, a power consumption optimization policy of the cooling system by using the target model includes: generating a plurality of parameter combinations according to a policy optimization algorithm, where each parameter combination includes a parameter value corresponding to each controllable operating parameter; calling the target model to predict power consumption of the cooling system according to each parameter combination, to obtain a power consumption prediction result; where the power consumption prediction result includes: predicted power consumption of the cooling system in each parameter combination; and selecting one parameter combination from the plurality of parameter combinations as the power consumption optimization policy of the cooling system according to the power consumption prediction result. As can be seen, the power consumption optimization policy is determined based on the power consumption prediction result, so that the power consumption optimization policy has a basis, thereby improving reliability and accuracy of the power consumption optimization policy. Specifically, a parameter combination corresponding to the lowest power consumption may be directly selected as the power consumption optimization policy of the cooling system from the power consumption prediction result. Alternatively, effective power consumption is selected from the power consumption prediction result, where the effective power consumption is power consumption greater than a power consumption threshold; and power consumption is randomly selected from the effective power consumption, and a parameter combination corresponding to the selected power consumption is used as the power consumption optimization policy of the cooling system.

In the embodiments of this application, the initial predictive model for predicting power consumption of the cooling system may be determined, the initial predictive model is trained to obtain the target model, and the model is deployed to the controller of the cooling system, so that the controller may determine the power consumption optimization policy of the cooling system by using the target model, and automatically and intelligently perform optimization control on power consumption of the cooling system by using the determined power consumption optimization policy, thereby effectively reducing power consumption of the cooling system. Further, the target algorithm for power consumption prediction is selected for the initial predictive model by using the open toolbox, so that processing logic of the initial predictive model may be whitebox to some extent. In this way, the power consumption optimization policy determined by using the target model obtained by training the initial predictive model has relatively high interpretability and reliability, so that optimization control may be accurately performed on power consumption of the cooling system by using the determined power consumption optimization policy, thereby facilitating power consumption reduction. In addition, the initial predictive model is trained by using the open source data set, so that a closed algorithm and closed security implementation can be avoided, and reliability of the target model obtained through training can be effectively improved, thereby further improving the reliability of the power consumption optimization policy obtained by using the target model and further facilitating power consumption reduction.

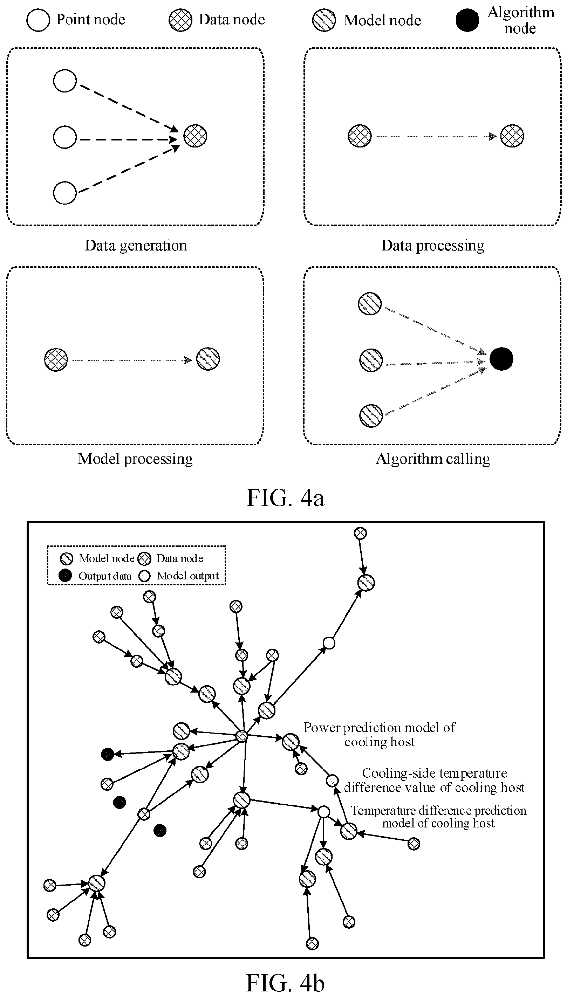

In some embodiments, the operating architecture provided in the embodiments of this application may further standardize metadata such as a data point, a data set, an algorithm, and a model, and construct the metadata into a network topology diagram, so that data can be managed and used better by using the network topology diagram, thereby improving data value and efficiency. Referring to FIG. 4a, in a network topology diagram constructed by using the operating architecture provided in the embodiments of this application, the concept of cloud data of AI is classified into metadata types of four nodes: a point node, a data node, a model node, and an algorithm node. Description (definition) of the types of nodes are as follows:

(1) The point node represents description of a data source and a collection point. In a data collection and processing process, a point node is used to indicate a specific data collection position or a data source, one point node may correspond to one point, and one point may be used as one data source. In an actual application, a point corresponding to a point node may generally include a sensor, a meter, a counting device, a network interface, a system interface, and the like. A point corresponding to each point node may collect specific data, for example, a physical number such as a temperature, a humidity, a pressure, a traffic, or a speed or device status information. In a data processing process, the point node may further be used to describe a data collection condition and a data collection environment. For example, a point node corresponding to a temperature sensor may include information such as a temperature range, measurement precision, a sampling frequency, an installation position, and an ambient temperature. The information may help a data processing system better understand and analyze data and improve data processing accuracy and efficiency. In a data collection and processing system, definition and description of a point node are very important. Clear definition and description of a point node can help a data processing system better manage and analyze data and improve data processing efficiency and data quality. In addition, definition and description of a point node also provide more information and reference basis for data analysis and application and help better understand and use the data.

(2) The data node represents description of data integration and data storage. In a data management and processing process, a data node is used to indicate a location for data integration and storage. Data integration refers to integrating data from different data sources into one unified data storage and management system. Data storage refers to storing data on a specific storage medium such as a database, a file system, or a cloud storage. One data node corresponds to one data set, any data node may be connected to at least one point node or another data node by using at least one directed edge, and at least one directed edge points to the any data node. A data set corresponding to any data node may be constructed according to data corresponding to each node connected to the at least one directed edge. In an actual application, the data node may be generally related to three parts: a data source, a data storage space, and a data processing algorithm. The data source is a device or a system (that is, the point) that generates data, for example, a sensor, a meter, or a computer system. The data storage space is a medium or a system for storing data, for example, a database or a file system. A data processing algorithm is an algorithm that processes and analyzes data of another node pointing to a data node by using a directed edge, for example, a data mining algorithm, a machine learning algorithm, and an AI algorithm. Definition and description of a data node are very important for data management and processing. Clear definition and description of a data node can help a system administrator better manage and maintain a data storage and processing system and improve system reliability and efficiency. In addition, definition and description of a data node also provide more information and reference basis for data analysis and application and help better understand and use the data. In an actual application, a plurality of factors need to be considered for definition and description of a data node, for example, a data source, a data type, a data volume, and a data processing requirement. By comprehensively considering these factors, a data node solution suitable for a particular application scenario may be designed.

(3) The model node represents description of data training and a twin model. In machine learning and AI application, one model node corresponds to one sub-model, and a model is a mathematic model for describing a relationship between data, for example, a neural network, a decision tree, or a support vector machine. Processing of a sub-model corresponding to a model node may include two parts: model training and model usage. Model training refers to training a model by using an existing data set, so that the model can predict or classify unknown data. A plurality of factors need to be considered for model training, for example, data quality, data distribution, model complexity, and model accuracy. A model training process usually includes operations such as data preprocessing, feature extraction, model selection, and parameter adjustment. Model usage refers to predicting or classifying new data by using a trained model. A plurality of factors need to be considered for model usage, for example, data quality, data distribution, model complexity, and model accuracy. A model usage process usually includes operations such as data preprocessing, feature extraction, model prediction, and result analysis. Definition and description of a model node are very important for machine learning and AI application. Clear definition and description of a model node can help a data scientist better manage and maintain a model training and usage process and improve model accuracy and efficiency. In addition, definition and description of a model node also provide more information and reference basis for data analysis and application and help better understand and use the model. During actual application, a plurality of factors need to be considered for definition and description of a model node, for example, a data type, an application scenario, model complexity, and model accuracy. By comprehensively considering these factors, a model node solution suitable for a particular application scenario may be designed.

(4) The algorithm node represents description of model calling and a prediction algorithm. In machine learning and AI application, one algorithm node corresponds to a prediction algorithm used by one sub-model. As can be seen, the algorithm node may be related to several parts such as model usage and a prediction algorithm. Model calling refers to calling a trained model and inputting new data into the model for prediction or classification. A plurality of factors need to be considered for model calling, for example, model complexity, model accuracy, and calling interface design. A model calling process usually includes operations such as data preprocessing, feature extraction, model calling, and result analysis. The prediction algorithm is a specific algorithm for predicting or classifying a trained model. For the prediction algorithm, a suitable algorithm needs to be selected according to a specific application scenario, for example, a rule-based algorithm, a statistics-based algorithm, or a neural network-based algorithm. A plurality of factors need to be considered for selection of the prediction algorithm, for example, a data type, data distribution, algorithm complexity, and algorithm accuracy. Definition and description of an algorithm node are very important for machine learning and AI application. A policy algorithm is an algorithm that searches for an optimal control execution parameter of a cooling system of a data center by using a plurality of models and algorithm logic, and outputs a corresponding control policy. Clear definition and description of an algorithm node can help a data scientist better manage and maintain model calling, a prediction algorithm process, and a policy algorithm process and improve algorithm accuracy and efficiency. In addition, definition and description of an algorithm node also provide more information and reference basis for data analysis and application and help better understand and use the algorithm. During actual application, a plurality of factors need to be considered for definition and description of an algorithm node, for example, a data type, an application scenario, algorithm complexity, and algorithm accuracy. By comprehensively considering these factors, an algorithm node solution suitable for a particular application scenario may be designed.

Further, the foregoing four types of nodes may be connected by using directed edges, and abstract description of a connection relationship thereof is as follows:

(1) Connection from a plurality of point nodes to a data node is described as data generation. That is, when a plurality of point nodes is connected to one data node by using directed edges, data processing may be performed, by using a data processing algorithm related to the data node, on parameter values collected by points corresponding to the plurality of point nodes, to generate a data set corresponding to the data node.

(2) Connection from a plurality of data nodes to a data node is described as data processing. That is, when a plurality of data nodes are connected to another data node by using directed edges, data processing may be performed, by using a data processing algorithm related to the another data node, on a data set corresponding to the plurality of data nodes, to generate a data set corresponding to the another data node.

(3) Connection from a single data node to a model node is described as model processing. That is, when a data node is connected to a model node by using a directed edge, a data set corresponding to the data node may be used to perform model training or model application on a sub-model corresponding to the model node. Specifically, the data set corresponding to the data node is used as an input of a sub-model corresponding to the model node, so that the sub-model corresponding to the model node may perform prediction processing according to inputted data. In a case of model training, a corresponding sub-model is optimized according to a prediction processing result. In a case of model application, a prediction processing result is directly outputted.

(4) Connection from a plurality of model nodes to an algorithm node is described as algorithm calling. That is, when a plurality of model nodes are connected to one algorithm node by using directed edges, a sub-model corresponding to each of the plurality of model nodes calls a prediction algorithm corresponding to the algorithm node, to perform prediction processing. In addition, connection from a single model node to a model node may be described as model coupling. That is, when a model node is connected to another model node by using a directed edge, an output of a sub-model corresponding to the model node needs to be used as an input of a sub-model corresponding to the another model node. For example, as shown in FIG. 4b, a cooling-side temperature difference value of the cooling host outputted by the temperature difference prediction model of the cooling host may be used as an input of the power prediction model of the cooling host.

Finally, a plurality of algorithm nodes may be connected for computation, to form a network topology diagram for policy computation. The algorithm nodes can cooperate with each other to jointly complete complex prediction and analysis tasks, thereby further improving data value and efficiency. In a data center, a topology structure of the network topology diagram may be used for calculation and analysis, to determine an optimal energy saving working condition of the cooling system and output a corresponding power consumption optimization policy, thereby implementing energy saving optimization of the cooling system in the data center.

Based on the foregoing description, in an actual application of the embodiments of this application, a network topology diagram may be configured for the cooling system, to improve efficiency of links such as model training and optimization control by using the network topology diagram. Specifically, the network topology diagram includes T point nodes, X data nodes, Y model nodes, and Z algorithm nodes, and T, X, Y, and Z are all positive integers; where

one point node corresponds to one point, and the point is configured to collect a parameter value of a component in the cooling system;

one data node corresponds to one data set, the network topology diagram has N nodes for an $x^{th}$ data node, each of the N nodes points to the $x^{th}$ data node through a directed edge, a data set corresponding to the $x^{th}$ data node is constructed according to data corresponding to the N nodes, the N nodes include at least one of the following: at least one point node and at least one data node other than the $x^{th}$ data node, $x \in [1, X]$, and N is a positive integer;

one model node corresponds to one sub-model, the network topology diagram has M nodes for a $y^{th}$ model node, each of the M nodes points to the $y^{th}$ model node through a directed edge, a sub-model corresponding to the $y^{th}$ model node performs model processing according to data corresponding to the M nodes, the M nodes include at least one of the following: at least one data node and at least one model node other than the $y^{th}$ model node, $y \in [1, Y]$, and M is a positive integer; and

one algorithm node corresponds to one prediction algorithm, the network topology diagram has h model nodes for a $z^{th}$ algorithm node, each of the h model nodes points to the $z^{th}$ algorithm node through a directed edge, a prediction algorithm corresponding to the $z^{th}$ algorithm node is called by a model corresponding to each of the h model nodes, $z \in [1, Z]$, and $h \in [1, X]$.

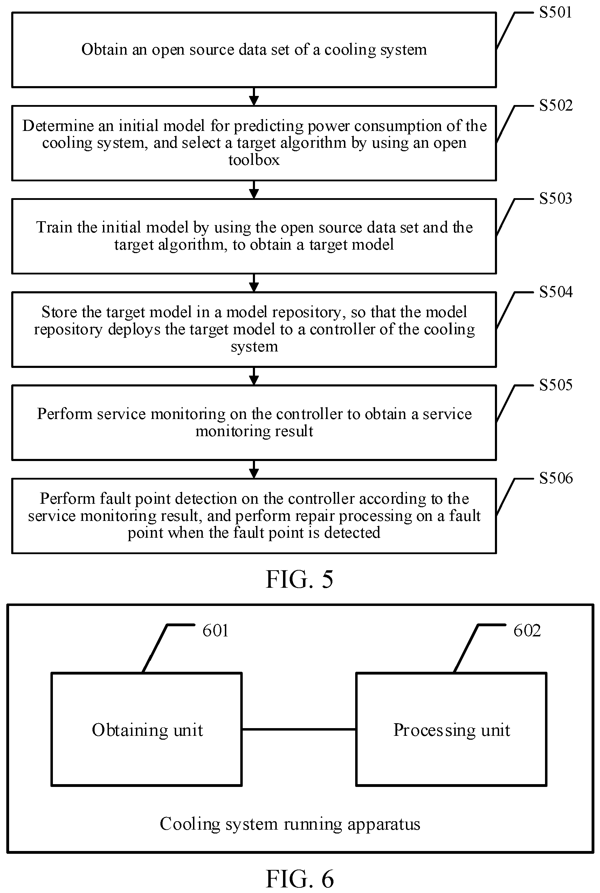

Based on this, an embodiment of this application provides another cooling system operating method. Referring to FIG. 5, the cooling system operating method may include the following operations S501 to S506:
S501: Obtain an open source data set of a cooling system, the cooling system including a plurality of components, one or more parameters being configured for each component, the open source data set including a parameter value corresponding to the parameter configured for each component, the plurality of components including at least one first component, and a parameter configured for each first component including a controllable operating parameter.

S502: Determine an initial predictive model for predicting power consumption of the cooling system, and select a target algorithm by using an open toolbox, the target algorithm being applied to the initial predictive model to predict power consumption.

The initial predictive model includes: a sub-model configured for each component in the cooling system. During specific implementation, when determining the initial predictive model used for predicting power consumption of the cooling system, for any component in the cooling system, the computer device may traverse each point in the component, determine a point node corresponding to a currently traversed point in the network topology diagram, determine a model node to which the point node is indirectly connected by using a plurality of directed edges, determine a sub-model corresponding to the model node as a sub-model corresponding to the component, and continue to traverse, to determine each sub-model corresponding to the component.

Correspondingly, the target algorithm includes: a prediction algorithm used by each sub-model in the initial predictive model. Similar to the model determining manner described above, when selecting the target algorithm by using the open toolbox, the computer device may locate, for any sub-model in the initial predictive model, a model node corresponding to the sub-model from the network topology diagram; and then use, according to the topology structure of the network topology diagram by using the open toolbox as a prediction algorithm used by the any sub-model, a prediction algorithm corresponding to an algorithm node to which the identified model node points through a directed edge. It can be seen that algorithm selection efficiency can be improved by performing algorithm selection by using the network topology diagram.

S503: Train the initial predictive model by using the open source data set and the target algorithm, to obtain a target model.

A training process of any sub-model in the initial predictive model includes: obtaining training data of any sub-model according to a parameter value corresponding to each parameter of each component in the open source data set, and a topology structure of the network topology diagram of the cooling system, to improve the efficiency of obtaining training data; and after the training data of the any sub-model is obtained, training the any sub-model based on the training data in a supervised training manner. For a specific training manner, refer to related description in the foregoing method embodiment shown in FIG. 2. Details are not described herein again.

A manner of obtaining training data of any sub-model may be: determining, in the network topology diagram, a model node corresponding to the any sub-model, and determining, according to a topology structure of the network topology diagram, each point node related to the model node, where any determined point node is indirectly connected to the model node by using a plurality of directed edges, and the plurality of directed edges all point to the model node; and selecting, from the open source data set, parameter values collected by a point corresponding to each determined point node, and inputting the selected parameter values to the network topology diagram for diagram calculation, to obtain the training data of the any sub-model. The diagram calculation mentioned herein may include: performing, according to a data processing algorithm related to a data node connected to each determined point node, data processing on parameter values corresponding to the corresponding point node, to obtain a data set corresponding to the corresponding data node; and if the data node is directly connected to a model node corresponding to any sub-model by using a directed edge, using, as the training data of the any sub-model, the data set corresponding to the corresponding data node; or if the data node is not directly connected to a model node corresponding to any sub-model, performing, according to the topology structure of the network topology diagram, further processing on the data set corresponding to the data node, to obtain the training data of the any sub-model.

S504: Store the target model in a model repository, so that the model repository deploys the target model to a controller of the cooling system, and the controller determines a power consumption optimization policy of the cooling system by using the target model, and controls operation of a corresponding first component in the cooling system according to a parameter value corresponding to each controllable operating parameter defined by a determined power consumption optimization policy.

Further, after the target model is deployed to the controller, after the controller uses the target model for a preset time period, the time period in which the controller uses the target model is used as a target time period, and first energy consumption statuses of the data center in the target time period may be counted. The data center may generate a plurality of pieces of environmental data in the target time period, and the first energy consumption status includes: an energy efficiency indication value of the data center in each piece of environmental data in a case that the target model is used. Besides, a second energy consumption status of the data center is obtained, and the second energy consumption status includes: an energy efficiency indication value of the data center in each piece of environmental data in a case that the target model is not used. Then, energy saving performance of the target model may be tested according to the first energy consumption status and the second energy consumption status. A test manner herein is similar to that of the intermediate model, and details are not described herein again. If it is determined that the target model fails the energy saving performance test, the target model may be trained again, to update the target model.

Correspondingly, each time the model repository detects that the target model is updated, the target model deployed in the controller is updated online according to the updated target model, to ensure that the target model in the controller is a latest model. In this way, model performance of the target model in the controller can be improved in time, thereby improving accuracy of the power consumption optimization policy determined by the controller by using the target model and ensuring energy consumption reduction. Specifically, the model repository may send a model parameter of the updated target model to the controller, so that the controller updates, to the model parameter sent by the model repository, a model parameter of the target model deployed to the controller, to update the target model online.

S505: Perform service monitoring on the controller to obtain a service monitoring result.

The service monitoring result includes at least one of the following: an operating status of the controller and an operating status of the target model in the controller. When the target model includes a plurality of sub-models, the operating status of the target model includes an operating status of each sub-model. A watchdog may be configured for each sub-model in the target model in the controller, to monitor an operating status of a corresponding sub-model in real time by using each configured watchdog, to obtain an operating status of each sub-model in the target model.

S506: Perform fault point detection on the controller according to the service monitoring result, and perform repair processing on a fault point when the fault point is detected.

In a specific implementation, after the fault point is detected, prompt information may be outputted to an operation personnel, so that the operation personnel may perform repair processing on the fault point in time, thereby ensuring performance of the controller to enable the controller to run normally, and reducing energy consumption of the cooling system by using the controller. The fault point includes at least one of the following: a faulty hardware facility in the controller and a faulty model in the controller. Specifically, if the service monitoring result includes the operating status of the controller, consistency check may be performed on the operating status of the controller in the service monitoring result and a specified operating status of the controller; and it is determined that the controller has no fault point if consistent; or it is determined that the controller has a fault point if inconsistent. If the service monitoring result includes the operating status of the target model, consistency check is performed on an operating status of each sub-model in the target model in the service monitoring result and a specified model operating status; and if an operating status of a sub-model is inconsistent with the specified model status, it is determined that a fault point is detected in the target model, and the sub-model may be used as a fault point; or if an operating status of no sub-model is inconsistent with the specified model status, it is determined that no fault point is detected in the target model.

In the embodiments of this application, the initial predictive model for predicting power consumption of the cooling system may be determined, the initial predictive model is trained to obtain the target model, and the model is deployed to the controller of the cooling system, so that the controller may determine the power consumption optimization policy of the cooling system by using the target model, and automatically and intelligently perform optimization control on power consumption of the cooling system by using the determined power consumption optimization policy, thereby effectively reducing power consumption of the cooling system. Further, the target algorithm for power consumption prediction is selected for the initial predictive model by using the open toolbox, so that processing logic of the initial predictive model may be whitebox to some extent. In this way, the power consumption optimization policy determined by using the target model obtained by training the initial predictive model has relatively high interpretability and reliability, so that optimization control may be accurately performed on power consumption of the cooling system by using the determined power consumption optimization policy, thereby facilitating power consumption reduction. In addition, the initial predictive model is trained by using the open source data set, so that a closed algorithm and closed security implementation can be avoided, and reliability of the target model obtained through training can be effectively improved, thereby further improving the reliability of the power consumption optimization policy obtained by using the target model and further facilitating power consumption reduction.

Based on the description of the foregoing embodiments of the cooling system operating method, an embodiment of this application further discloses a cooling system operating apparatus. The cooling system operating apparatus may be a computer program (including one or more instructions) operating in a computer device. The cooling system operating apparatus may be configured to perform operations in the procedure of the method shown in FIG. 2 or FIG. 5. Referring to FIG. 6, the cooling system operating apparatus may run the following units:

an obtaining unit 601, configured to obtain an open source data set of a cooling system, the cooling system including a plurality of components, one or more parameters being configured for each component, the open source data set including a parameter value corresponding to the parameter configured for each component, the plurality of components including at least one first component, and a parameter configured for each first component including a controllable operating parameter; and

a processing unit 602, configured to determine an initial predictive model for predicting power consumption of the cooling system, and select a target algorithm by using an open toolbox, the target algorithm being applied to the initial predictive model to predict power consumption;

the processing unit 602 being further configured to train the initial predictive model by using the open source data set and the target algorithm, to obtain a target model; and

the processing unit 602 being further configured to deploy the target model to a controller of the cooling system, so that the controller determines a power consumption optimization policy of the cooling system by using the target model, the power consumption optimization policy defining a parameter value corresponding to the controllable operating parameter of the at least one first component; and controls operation of a corresponding first component in the cooling system according to a parameter value corresponding to each controllable operating parameter defined by the determined power consumption optimization policy.

In another implementation, when being configured to train the initial predictive model by using the open source data set and the target algorithm, to obtain a target model, the processing unit 602 may be specifically configured to:

training the initial predictive model by using the open source data set and the target algorithm, to obtain an intermediate model;

performing a performance test on the intermediate model by using a simulation system, to obtain a test result; where the simulation system includes: a digital twin system that is established by integrating a mechanistic model and a data drive and that corresponds to the cooling system; and

using the intermediate model as the target model if the test result indicates that the intermediate model passes the performance test; or

training the intermediate model to obtain the target model if the test result indicates that the intermediate model fails the performance test.

In another implementation, the intermediate model includes an intermediate sub-model obtained by training each sub-model. Correspondingly, when being configured to perform a performance test on the intermediate model by using a simulation system, to obtain a test result, the processing unit 602 may be specifically configured to:

obtain, for a $k^{th}$ intermediate sub-model in the intermediate model, test data of the $k^{th}$ intermediate sub-model by operating the simulation system; where $k \in$ [1, K], and K is a number of intermediate sub-models included in the intermediate model; and

test precision performance of the $k^{th}$ intermediate sub-model by using the test data, to obtain a test result.

In another implementation, the cooling system is located in a data center. Correspondingly, when being configured to perform a performance test on the intermediate model by using a simulation system, to obtain a test result, the processing unit 602 may be specifically configured to:

control operation of the simulation system in a preset time period by using the intermediate model; and count target energy consumption statuses of the data center in the preset time period after the preset time period ends; where the data center generates a plurality of pieces of environmental data in the preset time period, and the target energy consumption status includes: an energy efficiency indication value of the data center in each of the plurality of pieces of environmental data;

obtain a reference energy consumption status of the data center, where the reference energy consumption status includes: an energy efficiency indication value of the data center in each of the plurality of pieces of environmental data in a case that the intermediate model is not used; and

test energy saving performance of the intermediate model according to the target energy consumption statuses and the reference energy consumption status, to obtain the test result.

In another implementation, when being configured to control operation of the simulation system in a preset time period by using the intermediate model, the processing unit 602 may be specifically configured to:

run each component in the simulation system;

periodically calculate a power consumption optimization policy of the simulation system in the preset time period by using the intermediate model; and

control, each time a power consumption optimization policy is calculated, operation of a corresponding first component in the simulation system according to a parameter value corresponding to each controllable operating parameter defined by the currently calculated power consumption optimization policy.

In another implementation, when being configured to test energy saving performance of the intermediate model according to the target energy consumption statuses and the reference energy consumption status, to obtain the test result, the processing unit 602 may be specifically configured to:

perform energy saving evaluation on the intermediate model according to the target energy consumption statuses and the reference energy consumption status, to obtain a target saved energy consumption value of the intermediate model; and

test energy saving performance of the intermediate model based on the target saved energy consumption value of the intermediate model and a preset energy saving condition, to obtain the test result.

In another implementation, the energy efficiency indication value is a ratio of all energy consumed by the data center to energy consumed by a device load of the data center. Correspondingly, when being configured to perform energy saving evaluation on the intermediate model according to the target energy consumption statuses and the reference energy consumption status, to obtain a target saved energy consumption value of the intermediate model, the processing unit 602 may be specifically configured to:

traverse the plurality of pieces of environmental data generated by the data center in the preset time period, determine currently traversed environmental data as current environmental data, and determine a device load average corresponding to the current environmental data;

calculate energy saving efficiency of the intermediate model in the current environmental data according to an energy efficiency indication value corresponding to the current environmental data in the target energy consumption status, an energy efficiency indication value corresponding to the current environmental data in the reference energy consumption status, and a device load average corresponding to the current environmental data;

calculate a saved energy consumption value of the intermediate model in the current environmental data according to the calculated energy saving efficiency and a duration of the current environmental data in the preset time period; and

integrate saved energy consumption values of the intermediate model in all the plurality of pieces of environmental data after all the environmental data is traversed, to obtain the target saved energy consumption value of the intermediate model.

In another implementation, one piece of environmental data is a combination of one same wet-bulb temperature and one device load interval. Correspondingly, when being configured to determine a device load average corresponding to the current environmental data, the processing unit 602 may be specifically configured to:

determine a maximum load value and a minimum load value corresponding to a device load interval in the current environmental data; and

perform an averaging operation on the determined maximum load value and minimum load value, to obtain the device load average corresponding to the current environmental data.

In another implementation, when being configured to calculate energy saving efficiency of the intermediate model in the current environmental data according to an energy efficiency indication value corresponding to the current environmental data in the target energy consumption status, an energy efficiency indication value corresponding to the current environmental data in the reference energy consumption status, and a device load average corresponding to the current environmental data, the processing unit 602 may be specifically configured to:

perform a difference operation on the energy efficiency indication value corresponding to the current environmental data in the target energy consumption status and the energy efficiency indication value corresponding to the current environmental data in the reference energy consumption status; and

perform a multiplication operation on a difference operation result and the device load average corresponding to the current environmental data, to obtain the energy saving efficiency of the intermediate model in the current environmental data.

In another implementation, the preset energy saving condition is used to indicate: the target saved energy consumption value of the intermediate model is greater than or equal to a preset saved energy consumption value; and correspondingly, when being configured to test energy saving performance of the intermediate model based on the target saved energy consumption value of the intermediate model and a preset energy saving condition, to obtain the test result, the processing unit 602 may be specifically configured to:

generate, if the target saved energy consumption value of the intermediate model is greater than or equal to the preset saved energy consumption value, a test result for indicating that the intermediate model passes the performance test; or

generate, if the target saved energy consumption value of the intermediate model is less than the preset saved energy consumption value, a test result for indicating that the intermediate model fails the performance test.

In another implementation, the processing unit 602 may be configured to perform a training process of any sub-model in the initial predictive model, and the training process includes: obtaining training data of any sub-model according to a parameter value corresponding to each parameter of each component in the open source data set, and a topology structure of the network topology diagram of the cooling system; and training the any sub-model based on the training data in a supervised training manner.

In another implementation, when being configured to select a target algorithm by using an open toolbox, the processing unit 602 may be specifically configured to:

identify, from the network topology diagram for any sub-model in the initial predictive model, a model node corresponding to the any sub-model; and use, according to the topology structure of the network topology diagram by using the open toolbox as a prediction algorithm used by the any sub-model, a prediction algorithm corresponding to an algorithm node to which the identified model node points through a directed edge.

In another implementation, when being configured to deploy the target model to the controller of the cooling system, the processing unit 602 may be specifically configured to:

store the target model in a model repository, so that the model repository deploys the target model to the controller of the cooling system; where

each time the model repository detects that the target model is updated, the target model deployed in the controller is updated online according to the updated target model.

In another implementation, after deploying the target model to the controller, the processing unit 602 may be further configured to:

perform service monitoring on the controller to obtain a service monitoring result; where the service monitoring result includes at least one of the following: an operating status of the controller and an operating status of the target model in the controller; and

perform fault point detection on the controller according to the service monitoring result, and perform repair processing on a fault point when the fault point is detected; where the fault point includes at least one of the following: a faulty hardware facility in the controller and a faulty model in the controller.

In another implementation, a process of determining, by the controller, a power consumption optimization policy of the cooling system by using the target model includes:

generating a plurality of parameter combinations according to a policy optimization algorithm, where each parameter combination includes a parameter value corresponding to each controllable operating parameter;

calling the target model to predict power consumption of the cooling system according to each parameter combination, to obtain a power consumption prediction result; where the power consumption prediction result includes: predicted power consumption of the cooling system in each parameter combination; and

selecting one parameter combination from the plurality of parameter combinations as the power consumption optimization policy of the cooling system according to the power consumption prediction result.

According to another embodiment of this application, units of the cooling system operating apparatus shown in FIG. 6 may be separately or wholly combined into one or more other units, or one (or more) of the units may be divided into a plurality of units of smaller functions. In this way, the same operations can be implemented, and implementation of the technical effects of the embodiments of this application is not affected. The foregoing units are divided based on logical functions. In an actual application, a function of one unit may be implemented by a plurality of units, or functions of a plurality of units are implemented by one unit. In another embodiment of this application, the cooling system operating apparatus may also include another unit. In an actual application, these functions may alternatively be cooperatively implemented by another unit and may be cooperatively implemented by a plurality of units.

According to another embodiment of this application, a computer program (including one or more instructions) that can perform the operations related to the corresponding methods shown in FIG. 2 or FIG. 5 may be run on a generic computing device such as a computer including processing elements and memory elements such as a central processing unit (CPU), a random access memory (RAM), and a read-only memory (ROM), to construct the cooling system operating apparatus shown in FIG. 6 and implement the cooling system operating method in the embodiments of this application. The computer program may be recorded in, for example, a computer-readable storage medium, loaded on the computing device by using the computer-readable storage medium, and run in the computing device.

In the embodiments of this application, the initial predictive model for predicting power consumption of the cooling system may be determined, the initial predictive model is trained to obtain the target model, and the model is deployed to the controller of the cooling system, so that the controller may determine the power consumption optimization policy of the cooling system by using the target model, and automatically and intelligently perform optimization control on power consumption of the cooling system by using the determined power consumption optimization policy, thereby effectively reducing power consumption of the cooling system. Further, the target algorithm for power consumption prediction is selected for the initial predictive model by using the open toolbox, so that processing logic of the initial predictive model may be whitebox to some extent. In this way, the power consumption optimization policy determined by using the target model obtained by training the initial predictive model has relatively high interpretability and reliability, so that optimization control may be accurately performed on power consumption of the cooling system by using the determined power consumption optimization policy, thereby facilitating power consumption reduction. In addition, the initial predictive model is trained by using the open source data set, so that a closed algorithm and closed security implementation can be avoided, and reliability of the target model obtained through training can be effectively improved, thereby further improving the reliability of the power consumption optimization policy obtained by using the target model and further facilitating power consumption reduction.

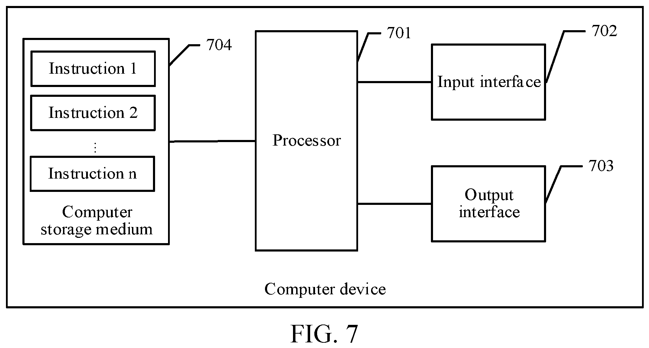

Based on the foregoing description of the method embodiments and the apparatus embodiments, an embodiment of this application further provides a computer device. Referring to FIG. 7, the computer device includes at least a processor 701, an input interface 702, an output interface 703, and a computer storage medium 704. The processor 701, the input interface 702, the output interface 703, and the computer storage medium 704 in the computer device may be connected through a bus or in another manner. The computer storage medium 704 may be stored in a memory in the computer device. The computer storage medium 704 is configured to store a computer program, where the computer program includes one or more instructions. The processor 701 is configured to execute the one or more instructions in the computer program stored in the computer storage medium 704. The processor 701 (or referred to as a central processing unit (CPU)) is a computing core and a control core of the computer device, is configured to implement one or more instructions, and is specifically configured to load and execute the one or more instructions to implement a corresponding method flow or a corresponding function.

In an embodiment, the processor 701 according to this embodiment of this application may be configured to perform a series of energy saving processing on the cooling system, specifically including: obtaining an open source data set of a cooling system, the cooling system including a plurality of components, one or more parameters being configured for each component, the open source data set including a parameter value corresponding to the parameter configured for each component, the plurality of components including at least one first component, and a parameter configured for each first component including a controllable operating parameter; determining an initial predictive model for predicting power consumption of the cooling system, and selecting a target algorithm by using an open toolbox, the target algorithm being applied to the initial predictive model to predict power consumption; training the initial predictive model by using the open source data set and the target algorithm, to obtain a target model; deploying the target model to a controller of the cooling system, so that the controller determines a power consumption optimization policy of the cooling system by using the target model, the power consumption optimization policy defining a parameter value corresponding to the controllable operating parameter of the at least one first component, and controls operation of a corresponding first component in the cooling system according to a parameter value corresponding to each controllable operating parameter defined by the determined power consumption optimization policy, and the like.

An embodiment of this application further provides a computer storage medium (memory). As a memory device in a computer device, the computer storage medium is configured to store a computer program and data. The computer storage medium may include a built-in storage medium in the computer device, or may certainly include an extended storage medium supported by the computer device. The computer storage medium provides storage space storing an operating system of the computer device. In addition, the storage space also stores a computer program, the computer program includes one or more instructions suitable for being loaded and executed by the processor 701, and these instructions can be one or more program code. The computer storage medium may be a high-speed RAM memory, or a non-volatile memory, for example, at least one magnetic disk storage. In some embodiments, the computer storage medium may be at least one computer storage medium located far from the processor.

In an embodiment, the processor may load and execute the one or more instructions stored in the computer storage medium, to implement corresponding operations in the foregoing method embodiments shown in FIG. 2 or FIG. 5. In a specific implementation, the one or more instructions in the computer storage medium may be loaded by the processor to perform the following operations:

obtaining an open source data set of a cooling system, the cooling system comprising a plurality of cooling components, to which one or more operating parameters are respectively assigned, the open source data set comprising a parameter value corresponding to the assigned parameter, the plurality of cooling components comprising at least one first cooling component, and the one or more parameters assigned to the first cooling component comprising a controllable operating parameter;

determining an initial predictive model for predicting power consumption for the cooling system, and selecting a target algorithm by using an open toolbox to apply to the initial predictive model to predict the power consumption;

training the initial predictive model by using the open source data set and the target algorithm, to obtain a target model which is deployed to a controller of the cooling system; and

the controller determines a power consumption optimization policy of the cooling system by using the target model, the power consumption optimization policy defining a parameter value corresponding to the controllable operating parameter of the at least one first cooling component; and

the controller controls operation of a corresponding first cooling component in the cooling system according to a parameter value corresponding to each controllable operating parameter defined by the determined power consumption optimization policy.

In an implementation, when training the model by using the open source data set and the target algorithm, to obtain a target model, the one or more instructions may be loaded by the processor to specifically perform:

training the initial predictive model by using the open source data set and the target algorithm, to obtain an intermediate model;

performing a performance test on the intermediate model by using a simulation system, to obtain a test result; where the simulation system includes: a digital twin system that is established by integrating a mechanistic model and a data drive and that corresponds to the cooling system; and

using the intermediate model as the target model if the test result indicates that the intermediate model passes the performance test; or

training the intermediate model to obtain the target model if the test result indicates that the intermediate model fails the performance test.

In another implementation, the intermediate model includes an intermediate sub-model obtained by training each sub-model. Correspondingly, when performing a performance test on the intermediate model by using the simulation system to obtain a test result, the one or more instructions may be loaded by the processor to specifically perform:

obtaining, for a $k^{th}$ intermediate sub-model in the intermediate model, test data of the $k^{th}$ intermediate sub-model by operating the simulation system; where $k \in [1, K]$, and K is a number of intermediate sub-models included in the intermediate model; and

testing precision performance of the $k^{th}$ intermediate sub-model by using the test data, to obtain a test result.

In another implementation, the cooling system is located in a data center. Correspondingly, when performing a performance test on the intermediate model by using the simulation system to obtain a test result, the one or more instructions may be loaded by the processor to specifically perform:

controlling operation of the simulation system in a preset time period by using the intermediate model; and counting target energy consumption statuses of the data center in the preset time period after the preset time period ends; where the data center generates a plurality of pieces of environmental data in the preset time period, and the target energy consumption status includes: an energy efficiency indication value of the data center in each of the plurality of pieces of environmental data;

obtaining a reference energy consumption status of the data center, where the reference energy consumption status includes: an energy efficiency indication value of the data center in each of the plurality of pieces of environmental data in a case that the intermediate model is not used; and

testing energy saving performance of the intermediate model according to the target energy consumption statuses and the reference energy consumption status, to obtain the test result.

In another implementation, when controlling operation of the simulation system in a preset time period by using the intermediate model, the one or more instructions may be loaded by the processor to specifically perform:

operating each component in the simulation system;

periodically calculating a power consumption optimization policy of the simulation system in the preset time period by using the intermediate model; and

controlling, each time a power consumption optimization policy is calculated, operation of a corresponding first component in the simulation system according to a parameter value corresponding to each controllable operating parameter defined by the currently calculated power consumption optimization policy.

In another implementation, when testing energy saving performance of the intermediate model according to the target energy consumption statuses and the reference energy consumption status, to obtain the test result, the one or more instructions may be loaded by the processor to specifically perform:

performing energy saving evaluation on the intermediate model according to the target energy consumption statuses and the reference energy consumption status, to obtain a target saved energy consumption value of the intermediate model; and

testing energy saving performance of the intermediate model based on the target saved energy consumption value of the intermediate model and a preset energy saving condition, to obtain the test result.

In another implementation, the energy efficiency indication value is a ratio of all energy consumed by the data center to energy consumed by a device load of the data center. Correspondingly, when performing energy saving evaluation on the intermediate model according to the target energy consumption statuses and the reference energy consumption status, to obtain a target saved energy consumption value of the intermediate model, the one or more instructions may be loaded by the processor to specifically perform:

traversing the plurality of pieces of environmental data generated by the data center in the preset time period, determining currently traversed environmental data as current environmental data, and determining a device load average corresponding to the current environmental data;

calculating energy saving efficiency of the intermediate model in the current environmental data according to an energy efficiency indication value corresponding to the current environmental data in the target energy consumption status, an energy efficiency indication value corresponding to the current environmental data in the reference energy consumption status, and a device load average corresponding to the current environmental data;

calculating a saved energy consumption value of the intermediate model in the current environmental data according to the calculated energy saving efficiency and a duration of the current environmental data in the preset time period; and

integrating saved energy consumption values of the intermediate model in all the plurality of pieces of environmental data after all the environmental data is traversed, to obtain the target saved energy consumption value of the intermediate model.

In another implementation, one piece of environmental data is a combination of one same wet-bulb temperature and one device load interval. Correspondingly, when determining a device load average corresponding to the current environmental data, the one or more instructions may be loaded by the processor to specifically perform:

determining a maximum load value and a minimum load value corresponding to a device load interval in the current environmental data; and

performing an averaging operation on the determined maximum load value and minimum load value, to obtain the device load average corresponding to the current environmental data.

In another implementation, when calculating energy saving efficiency of the intermediate model in the current environmental data according to an energy efficiency indication value corresponding to the current environmental data in the target energy consumption status, an energy efficiency indication value corresponding to the current environmental data in the reference energy consumption status, and a device load average corresponding to the current environmental data, the one or more instructions may be loaded by the processor to specifically perform:

performing a difference operation on the energy efficiency indication value corresponding to the current environmental data in the target energy consumption status and the energy efficiency indication value corresponding to the current environmental data in the reference energy consumption status; and

performing a multiplication operation on a difference operation result and the device load average corresponding to the current environmental data, to obtain the energy saving efficiency of the intermediate model in the current environmental data.

In another implementation, the preset energy saving condition is used to indicate: the target saved energy consumption value of the intermediate model is greater than or equal to a preset saved energy consumption value; and correspondingly, when testing energy saving performance of the intermediate model based on the target saved energy consumption value of the intermediate model and a preset energy saving condition, to obtain the test result, the one or more instructions may be loaded by the processor to specifically perform:

generating, if the target saved energy consumption value of the intermediate model is greater than or equal to the preset saved energy consumption value, a test result for indicating that the intermediate model passes the performance test; or

generating, if the target saved energy consumption value of the intermediate model is less than the preset saved energy consumption value, a test result for indicating that the intermediate model fails the performance test.

In another implementation, the one or more instructions may be loaded by the processor to specifically perform:

obtaining training data of any sub-model for a training process of any sub-model in the target model according to a parameter value corresponding to each parameter of each component in the open source data set, and a topology structure of the network topology diagram of the cooling system; and

training the any sub-model based on the training data in a supervised training manner.

In another implementation, when selecting the target algorithm by using an open toolbox, the one or more instructions may be loaded by the processor to specifically perform:

identifying, from the network topology diagram for any sub-model in the initial predictive model, a model node corresponding to the any sub-model; and

using, according to the topology structure of the network topology diagram by using the open toolbox as a prediction algorithm used by the any sub-model, a prediction algorithm corresponding to an algorithm node to which the identified model node points through a directed edge.

In another implementation, when deploying the target model to the controller of the cooling system, the one or more instructions may be loaded by the processor to specifically perform:

storing the target model in a model repository, so that the model repository deploys the target model to the controller of the cooling system; where

each time the model repository detects that the target model is updated, the target model deployed in the controller is updated online according to the updated target model.

In another implementation, after deploying the target model to the controller, the one or more instructions may be loaded by the processor to specifically perform:

performing service monitoring on the controller to obtain a service monitoring result; where the service monitoring result includes at least one of the following: an operating status of the controller and an operating status of the target model in the controller; and

performing fault point detection on the controller according to the service monitoring result, and performing repair processing on a fault point when the fault point is detected; where the fault point includes at least one of the following: a faulty hardware facility in the controller and a faulty model in the controller.

In another implementation, a process of determining, by the controller, a power consumption optimization policy of the cooling system by using the target model includes:

generating a plurality of parameter combinations according to a policy optimization algorithm, where each parameter combination includes a parameter value corresponding to each controllable operating parameter;

calling the target model to predict power consumption of the cooling system according to each parameter combination, to obtain a power consumption prediction result; where the power consumption prediction result includes: predicted power consumption of the cooling system in each parameter combination; and

selecting one parameter combination from the plurality of parameter combinations as the power consumption optimization policy of the cooling system according to the power consumption prediction result.

In the embodiments of this application, the initial predictive model for predicting power consumption of the cooling system may be determined, the initial predictive model is trained to obtain the target model, and the model is deployed to the controller of the cooling system, so that the controller may determine the power consumption optimization policy of the cooling system by using the target model, and automatically and intelligently perform optimization control on power consumption of the cooling system by using the determined power consumption optimization policy, thereby effectively reducing power consumption of the cooling system. Further, the target algorithm for power consumption prediction is selected for the initial predictive model by using the open toolbox, so that processing logic of the initial predictive model may be whitebox to some extent. In this way, the power consumption optimization policy determined by using the target model obtained by training the initial predictive model has relatively high interpretability and reliability, so that optimization control may be accurately performed on power consumption of the cooling system by using the determined power consumption optimization policy, thereby facilitating power consumption reduction. In addition, the initial predictive model is trained by using the open source data set, so that a closed algorithm and closed security implementation can be avoided, and reliability of the target model obtained through training can be effectively improved, thereby further improving the reliability of the power consumption optimization policy obtained by using the target model and further facilitating power consumption reduction.

According to an aspect of this application, a computer program product or a computer program is provided, the computer program product or the computer program including one or more instructions, and the one or more instructions being stored in a computer storage medium. A processor of a computer device reads the one or more instructions from the computer storage medium, and executes the one or more instructions, so that the computer device performs the method provided in the various optional implementations provided in the foregoing method embodiments shown in FIG. 2 or FIG. 5. What is disclosed above is merely exemplary embodiments of this application, and certainly is not intended to limit the scope of the claims of this application. Therefore, equivalent variations made in accordance with the claims of this application shall fall within the scope of this application.

**Claims**

1. A cooling system operating method, comprising:

obtaining an open source data set of a cooling system, the cooling system comprising a plurality of cooling components, to which one or more operating parameters are respectively assigned, the open source data set comprising a parameter value corresponding to the assigned parameter, the plurality of cooling components comprising at least one first cooling component, and the one or more parameters assigned to the first cooling component comprising a controllable operating parameter;

determining an initial predictive model for predicting power consumption for the cooling system, and selecting a target algorithm by using an open toolbox to apply to the initial predictive model to predict the power consumption;

training the initial predictive model by using the open source data set and the target algorithm, to obtain a target model which is deployed to a controller of the cooling system; and

the controller being configured to determine a power consumption optimization policy of the cooling system by using the target model, the power consumption optimization policy defining a parameter value corresponding to the controllable operating parameter of the at least one first cooling component; and control operation of a corresponding first cooling component in the cooling system according to a parameter value corresponding to each controllable operating parameter defined by the determined power consumption optimization policy.

2. The method according to claim 1, wherein the initial predictive model comprises: a sub-model configured for each cooling component in the cooling system, and the target algorithm comprises: a prediction algorithm used by each sub-model in the initial predictive model;

wherein sub-models in the initial predictive model use respective prediction algorithms to cooperatively predict power consumption of the cooling system.

3. The method according to claim 1 or 2, wherein the training the initial predictive model by using the open source data set and the target algorithm, to obtain a target model comprises:

training the initial predictive model by using the open source data set and the target algorithm, to obtain an intermediate model;

performing a performance test on the intermediate model by using a simulation system, to obtain a test result; wherein the simulation system comprises: a digital twin system that is established by integrating a mechanistic model and a data drive and that corresponds to the cooling system; and

using the intermediate model as the target model if the test result indicates that the intermediate model passes the performance test; or training the intermediate model to obtain the target model if the test result indicates that the intermediate model fails the performance test.

4. The method according to any one of claims 1 to 3, wherein the intermediate model comprises an intermediate sub-model obtained by training each sub-model; and the performing a performance test on the intermediate model by using a simulation system, to obtain a test result comprises:

obtaining, for a $k^{th}$ intermediate sub-model in the intermediate model, test data of the $k^{th}$ intermediate sub-model by operating the simulation system; wherein $k \in [1, K]$, and K is a number of intermediate sub-models comprised in the intermediate model; and

testing precision performance of the $k^{th}$ intermediate sub-model by using the test data, to obtain the test result.

5. The method according to any one of claims 1 to 4, wherein the cooling system is located in a data center; and the performing a performance test on the intermediate model by using a simulation system, to obtain a test result comprises:

controlling operation of the simulation system in a preset time period by using the intermediate model; and counting target energy consumption statuses of the data center in the preset time period after the preset time period ends; wherein the data center generates a plurality of pieces of environmental data in the preset time period, and the target energy consumption status comprises: an energy efficiency indication value of the data center in each of the plurality of pieces of environmental data;

obtaining a reference energy consumption status of the data center, wherein the reference energy consumption status comprises: an energy efficiency indication value of the data center in each of the plurality of pieces of environmental data in a case that the intermediate model is not used; and

testing energy saving performance of the intermediate model according to the target energy consumption statuses and the reference energy consumption status, to obtain the test result.

6. The method according to any one of claims 1 to 5, wherein the controlling operation of the simulation system in a preset time period by using the intermediate model comprises:

operating each component in the simulation system;

periodically calculating a power consumption optimization policy of the simulation system in the preset time period by using the intermediate model; and

controlling, each time a power consumption optimization policy is calculated, operation of a corresponding first component in the simulation system according to a parameter value corresponding to each controllable operating parameter defined by the currently calculated power consumption optimization policy.

7. The method according to any one of claims 1 to 6, wherein the testing energy saving performance of the intermediate model according to the target energy consumption statuses and the reference energy consumption status, to obtain the test result comprises:

performing energy saving evaluation on the intermediate model according to the target energy consumption statuses and the reference energy consumption status, to obtain a target saved energy consumption value of the intermediate model; and

testing energy saving performance of the intermediate model based on the target saved energy consumption value of the intermediate model and a preset energy saving condition, to obtain the test result.

8. The method according to any one of claims 1 to 7, wherein the energy efficiency indication value is a ratio of all energy consumed by the data center to energy consumed by a device load of the data center; and the performing energy saving evaluation on the intermediate model according to the target energy consumption statuses and the reference energy consumption status, to obtain a target saved energy consumption value of the intermediate model comprises:

traversing the plurality of pieces of environmental data generated by the data center in the preset time period, determining currently traversed environmental data as current environmental data, and determining a device load average corresponding to the current environmental data;

calculating energy saving efficiency of the intermediate model in the current environmental data according to an energy efficiency indication value corresponding to the current environmental data in the target energy consumption status, an energy efficiency indication value corresponding to the current environmental data in the reference energy consumption status, and a device load average corresponding to the current environmental data;

calculating a saved energy consumption value of the intermediate model in the current environmental data according to the calculated energy saving efficiency and a duration of the current environmental data in the preset time period; and

integrating saved energy consumption values of the intermediate model in all the plurality of pieces of environmental data after all the environmental data is traversed, to obtain the target saved energy consumption value of the intermediate model.

9. The method according to any one of claims 1 to 8, wherein one piece of environmental data is a combination of one same wet-bulb temperature and one device load interval; and the determining a device load average corresponding to the current environmental data comprises:

determining a maximum load value and a minimum load value corresponding to a device load interval in the current environmental data; and performing an averaging operation on the determined maximum load value and minimum load value, to obtain the device load average corresponding to the current environmental data.

10. The method according to any one of claims 1 to 9, wherein the calculating energy saving efficiency of the intermediate model in the current environmental data according to an energy efficiency indication value corresponding to the current environmental data in the target energy consumption status, an energy efficiency indication value corresponding to the current environmental data in the reference energy consumption status, and a device load average corresponding to the current environmental data comprises:

performing a difference operation on the energy efficiency indication value corresponding to the current environmental data in the target energy consumption status and the energy efficiency indication value corresponding to the current environmental data in the reference energy consumption status; and

performing a multiplication operation on a difference operation result and the device load average corresponding to the current environmental data, to obtain the energy saving efficiency of the intermediate model in the current environmental data.

11. The method according to any one of claims 1 to 10, wherein the preset energy saving condition is used to indicate: the target saved energy consumption value of the intermediate model is greater than or equal to a preset saved energy consumption value; and

the testing energy saving performance of the intermediate model based on the target saved energy consumption value of the intermediate model and a preset energy saving condition, to obtain the test result comprises:

generating, if the target saved energy consumption value of the intermediate model is greater than or equal to the preset saved energy consumption value, a test result for indicating that the intermediate model passes the performance test; or

generating, if the target saved energy consumption value of the intermediate model is less than the preset saved energy consumption value, a test result for indicating that the intermediate model fails the performance test.

12. The method according to any one of claims 1 to 11, wherein the cooling system is configured with a network topology diagram, the network topology diagram comprises T point nodes, X data nodes, Y model nodes, and Z algorithm nodes, and T, X, Y, and Z are all positive integers; wherein

one point node corresponds to one point, and the point is configured to collect a parameter value of a component in the cooling system;

one data node corresponds to one data set, the network topology diagram has N nodes for an $x^{th}$ data node, each of the N nodes points to the $x^{th}$ data node through a directed edge, a data set corresponding to the $x^{th}$ data node is constructed according to data corresponding to the N nodes, the N nodes comprise at least one of the following: at least one point node and at least one data node other than the $x^{th}$ data node, $x \in [1, X]$, and N is a positive integer;

one model node corresponds to one sub-model, the network topology diagram has M nodes for a $y^{th}$ model node, each of the M nodes points to the $y^{th}$ model node through a directed edge, a sub-model corresponding to the $y^{th}$ model node performs model processing according to data corresponding to the M nodes, the M nodes comprise at least one of the following: at least one data node and at least one model node other than the $y^{th}$ model node, $y \in [1, Y]$, and M is a positive integer; and

one algorithm node corresponds to one prediction algorithm, the network topology diagram has h model nodes for a $z^{th}$ algorithm node, each of the h model nodes points to the $z^{th}$ algorithm node through a directed edge, a prediction algorithm corresponding to the $z^{th}$ algorithm node is called by a model corresponding to each of the h model nodes, $z \in [1, Z]$, and $h \in [1,$

X].

13. The method according to any one of claims 1 to 12, wherein a training process of any sub-model in the initial predictive model comprises:

obtaining training data of any sub-model according to a parameter value corresponding to each parameter of each component in the open source data set, and a topology structure of the network topology diagram of the cooling system; and

training the any sub-model based on the training data in a supervised training manner.

14. The method according to any one of claims 1 to 13, wherein the selecting a target algorithm by using an open toolbox comprises:

identifying, from the network topology diagram for any sub-model in the initial predictive model, a model node corresponding to the any sub-model; and

using, according to the topology structure of the network topology diagram by using the open toolbox as a prediction algorithm used by the any sub-model, a prediction algorithm corresponding to an algorithm node to which the identified model node points through a directed edge.

15. The method according to any one of claims 1 to 14, wherein deploying the target model to a controller of the cooling system comprises:

storing the target model in a model repository, so that the model repository deploys the target model to the controller of the cooling system; wherein

each time the model repository detects that the target model is updated, the target model deployed in the controller is updated online according to the updated target model.

16. The method according to any one of claims 1 to 15, wherein after deploying the target model to the controller, the method further comprises:

performing service monitoring on the controller to obtain a service monitoring result; wherein the service monitoring result comprises at least one of the following: an operating status of the controller and an operating status of the target model in the controller; and

performing fault point detection on the controller according to the service monitoring result, and performing repair processing on a fault point when the fault point is detected; wherein the fault point comprises at least one of the following: a faulty hardware facility in the controller and a faulty model in the controller.

**17.** The method according to any one of claims 1 to 16, wherein a process of determining, by the controller, a power consumption optimization policy of the cooling system by using the target model comprises:

generating a plurality of parameter combinations according to a policy optimization algorithm, wherein each parameter combination comprises a parameter value corresponding to each controllable operating parameter; calling the target model to predict power consumption of the cooling system according to each parameter combination, to obtain a power consumption prediction result; wherein the power consumption prediction result comprises: predicted power consumption of the cooling system in each parameter combination; and selecting one parameter combination from the plurality of parameter combinations as the power consumption optimization policy of the cooling system according to the power consumption prediction result.

**18.** A cooling system operating apparatus, comprising:

an obtaining unit, configured to obtain an open source data set of a cooling system, the cooling system comprising a plurality of cooling components, to which one or more operating parameters are respectively assigned, the open source data set comprising a parameter value corresponding to the assigned parameter, the plurality of cooling components comprising at least one first cooling component, and the one or more parameters assigned to the first cooling component comprising a controllable operating parameter; and a processing unit, configured to determine an initial predictive model for predicting power consumption for the cooling system, and selecting a target algorithm by using an open toolbox to apply to the initial predictive model to predict the power consumption; the processing unit being further configured to train the initial predictive model by using the open source data set and the target algorithm, to obtain a target model which is deployed to a controller of the cooling system; and the controller being configured to determine a power consumption optimization policy of the cooling system by using the target model, the power consumption optimization policy defining a parameter value corresponding to the controllable operating parameter of the at least one first cooling component; and control operation of a corresponding first cooling component in the cooling system according to a parameter value corresponding to each controllable operating parameter defined by the determined power consumption optimization policy.

**19.** A computer device, comprising an input interface and an output interface, and further comprising: a processor and a computer storage medium; the processor being configured to implement one or more instructions, the computer storage medium storing the one or more instructions, and the one or more instructions being loaded by the processor to perform the cooling system operating method according to any one of claims 1 to 17.

**20.** A computer storage medium, having one or more instructions stored therein, the one or more instructions being loaded by a processor to perform the cooling system operating method according to any one of claims 1 to 17.

**21.** A computer program product, comprising one or more instructions, when the one or more instructions are executed by a processor, the cooling system operating method according to any one of claims 1 to 17 being implemented.

FIG. 1a

FIG. 1b

FIG. 1c

Obtain an open source data set of a cooling system — S201

Determine an initial model for predicting power consumption of the cooling system, and select a target algorithm by using an open toolbox — S202

Train the initial model by using the open source data set and the target algorithm, to obtain a target model — S203

Deploy the target model to a controller of the cooling system, so that the controller determines a power consumption optimization policy of the cooling system by using the target model, and controls operation of a corresponding first component in the cooling system according to a parameter value corresponding to each controllable operating parameter defined by a determined power consumption optimization policy — S204

FIG. 2

BA

AI

PUE

PUE

[Single same wet-bulb temperature and IT load range]

PUE difference * IT load average

Energy saving efficiency

*

Duration

Saved energy consumption value

FIG. 3

◯ Point node    ⊗ Data node    ⊘ Model node    ● Algorithm node

Data generation

Data processing

Model processing

Algorithm calling

FIG. 4a

Model node ⊘   Data node ⊗
Output data ●   Model output ◯

Power prediction model of cooling host

Cooling-side temperature difference value of cooling host

Temperature difference prediction model of cooling host

FIG. 4b

```
┌─────────────────────────────────────────────────────────────┐
│                                                             │ ╱─ S501
│           Obtain an open source data set of a cooling system │
│                                                             │
└─────────────────────────────────────────────────────────────┘
                              ↓
┌─────────────────────────────────────────────────────────────┐
│                                                             │ ╱─ S502
│   Determine an initial model for predicting power consumption of the │
│   cooling system, and select a target algorithm by using an open │
│                         toolbox                              │
└─────────────────────────────────────────────────────────────┘
                              ↓
┌─────────────────────────────────────────────────────────────┐
│                                                             │ ╱─ S503
│     Train the initial model by using the open source data set and the │
│              target algorithm, to obtain a target model     │
│                                                             │
└─────────────────────────────────────────────────────────────┘
                              ↓
┌─────────────────────────────────────────────────────────────┐
│                                                             │ ╱─ S504
│     Store the target model in a model repository, so that the model │
│     repository deploys the target model to a controller of the cooling │
│                         system                              │
└─────────────────────────────────────────────────────────────┘
                              ↓
┌─────────────────────────────────────────────────────────────┐
│                                                             │ ╱─ S505
│     Perform service monitoring on the controller to obtain a service │
│                      monitoring result                      │
│                                                             │
└─────────────────────────────────────────────────────────────┘
                              ↓
┌─────────────────────────────────────────────────────────────┐
│                                                             │ ╱─ S506
│    Perform fault point detection on the controller according to the │
│   service monitoring result, and perform repair processing on a fault │
│             point when the fault point is detected          │
└─────────────────────────────────────────────────────────────┘
```

FIG. 5

```
┌─────────────────────────────────────────────────────────────┐
│         ╱─ 601                          ╱─ 602               │
│    ┌──────────────────┐          ┌──────────────────┐        │
│    │                  │          │                  │        │
│    │                  │          │                  │        │
│    │   Obtaining unit │──────────│  Processing unit │        │
│    │                  │          │                  │        │
│    │                  │          │                  │        │
│    └──────────────────┘          └──────────────────┘        │
│                                                             │
│               Cooling system running apparatus              │
└─────────────────────────────────────────────────────────────┘
```

FIG. 6

FIG. 7

## INTERNATIONAL SEARCH REPORT

| International application No. |
| --- |
| **PCT/CN2024/091447** |

| A. | CLASSIFICATION OF SUBJECT MATTER |
| --- | --- |

G06F 1/20(2006.01)i

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNTXT, ENTXTC, CJFD: 腾讯科技, 粟海翰, 岳上, 杨朴, 吴越, 李鼎谦, 数据中心, 冷却, 散热, 空调, 系统, 模型, 预测, 训练, 部署, 功耗 , 能耗, 仿真, 能效, 节能, 评价 , 评估, 指标, 指示, 拓扑, IDC, DC, cool+, heat dissipat+, air condition+, system, model, predict+, train+, deploy, power, energy, conservation, consumption, efficiency, evaluation, index, indicator, topology

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116974347 A (TENCENT TECHNOLOGY (SHENZHEN) CO., LTD.) 31 October 2023 (2023-10-31)<br>claims 1-20, description, paragraphs [0003]-[0190], and figures 1-6 | 1-21 |
| X | WO 2021063033 A1 (BEIJING GRIDSUM TECHNOLOGY CO., LTD.) 08 April 2021 (2021-04-08)<br>description, page 5-page 19, and figures 1-10 | 1-4, 9, 15, 17-21 |
| A | CN 113825356 A (TENCENT TECHNOLOGY (SHENZHEN) CO., LTD. et al.) 21 December 2021 (2021-12-21)<br>entire document | 1-21 |
| A | DE 202017000308 U1 (GOOGLE INC.) 11 April 2017 (2017-04-11)<br>entire document | 1-21 |
| A | WO 2021042339 A1 (ALIBABA GROUP HOLDING LIMITED) 11 March 2021 (2021-03-11)<br>entire document | 1-21 |

| ✓ | Further documents are listed in the continuation of Box C. | ✓ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 July 2024** | **17 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/091447** |

| C. | DOCUMENTS CONSIDERED TO BE RELEVANT | |
| --- | --- | --- |
| Category* | Citation of document, with indication, where appropriate, of the relevant passages | Relevant to claim No. |
| A | WO 2022111232 A1 (ZTE CORP.) 02 June 2022 (2022-06-02)<br>entire document | 1-21 |

Form PCT/ISA/210 (second sheet) (July 2022)

International application No.

**PCT/CN2024/091447**

| Patent document cited in search report | | | Publication date (day/month/year) | Patent family member(s) | Publication date (day/month/year) |
|---|---|---|---|---|---|
| CN | 116974347 | A | 31 October 2023 | None | |
| WO | 2021063033 | A1 | 08 April 2021 | None | |
| CN | 113825356 | A | 21 December 2021 | None | |
| DE | 202017000308 | U1 | 11 April 2017 | None | |
| WO | 2021042339 | A1 | 11 March 2021 | None | |
| WO | 2022111232 | A1 | 02 June 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023107576139